# EUROPÄISCHE PATENTSCHRIFT

(11) **EP 2 438 113 B1**
(45) Veröffentlichungstag und Bekanntmachung des Hinweises auf die Patenterteilung: **24.07.2019**
(21) Anmeldenummer: 09779656.9
(22) Anmeldetag: 05.06.2009
(51) Int. Cl.: C08K 5/098, C08K 5/00, C08K 5/3492, C08K 5/5313, C08L 77/06

(54) **FLAMMGESCHÜTZTE, TEILAROMATISCHE POLYAMIDFORMMASSEN**
FLAME-PROTECTED, PARTIALLY AROMATIC POLYAMIDE MOLDING COMPOUNDS
MATIÈRES MOULABLES POLYAMIDES, PARTIELLEMENT AROMATIQUES, IGNIFUGES

(43) Veröffentlichungstag der Anmeldung: 11.04.2012
(73) Patentinhaber: EMS-Patent AG, 7013 Domat/Ems (CH)
(72) Erfinder: BAYER, Andreas, 7013 Domat/Ems (CH); LAMBERTS, Nikolai, 7402 Bonaduz (CH)
(74) Vertreter: Bremi, Tobias Hans
(86) Internationale Anmeldenummer: PCT/EP2009/056979
(87) Internationale Veröffentlichungsnummer: WO 2010/139369

(56) Entgegenhaltungen:
- WO-A1-2008/126381
- WO-A1-2009/109318
- US-A1- 2009 030 124

## Beschreibung

### TECHNISCHES GEBIET

Die vorliegende Erfindung betrifft Polyamidformmassen auf Basis von teilkristallinen Polyamiden. Insbesondere betrifft sie halogenfreie, flammgeschützte Formmassen auf Basis teilaromatischer Polyamide, die bevorzugtermassen Salze von Phosphinsäuren als Flammschutzmittel enthalten. Die Formmassen erfüllen die Brandschutzklassifikation V0 nach UL94, entfalten keine oder nur geringe Korrosionswirkung an den Maschinenkomponenten bei der thermoplastischen Verarbeitung und zeigen gute mechanische Eigenschaften. Diese Formmassen eignen sich zur Herstellung von insbesonders dünnwandigen Formkörpern für die Elektro- und Elektronik-Industrie wie beispielsweise Gehäusen, Gehäusekomponenten oder Konnektoren.

### STAND DER TECHNIK

Teilaromatische, teilkristalline Polyamide mit Schmelzpunkten von mindestens 270°C werden verbreitet zur Herstellung von Formmassen verwendet, welche die Herstellung von Formkörpern, z.B. für die Elektro- und Elektronik-Industrie, mit ausgezeichneter Formbeständigkeit bei hohen Temperaturen ermöglichen. Derartige Formmassen werden beispielsweise in der Elektronik-Industrie zur Herstellung von Bauteilen verlangt, die auf Printed Circuit Boards nach der sogenannten Surface Mounting Technology, SMT, montiert werden. In dieser Anwendung müssen diese Bauteile kurzzeitig Temperaturen von bis zu 270°C ohne Dimensionsänderung überstehen. Für sehr viele Anwendungen im Bereich Elektrik/Elektronik wird für die eingesetzten Formmassen eine Brandklassierung V0 gemäss UL94 gefordert. Aufgrund gesetzlicher Bestimmungen betreffend des Einsatzes und des Recyclings von Teilen aus solchen Formmassen muss die Flammschutzausrüstung halogenfrei sein.

Phosphinsäuresalze bieten eine sehr gute Möglichkeit auch hochschmelzende Polyamide sicher flammhemmend auszurüsten.

Allerdings verursachen derartig ausgerüstete Polyamidformmassen eine nicht tolerierbare Korrosion an metallischen Teilen der Verarbeitungsanlagen, die mit der Schmelze in Kontakt stehen.

So beschreibt z.B. die DE-A-103 16 873 flammgeschützte Polyamidformmassen, bestehend aus 30 - 80 Gew.-% teilkristallinen, teilaromatischen Polyamiden und 1 - 30 Gew.-% eines halogenfreien Flammschutzmittels, enthaltend ein Phosphinsäuresalz und/oder ein Diphosphinsäuresalz. Die auf Basis der Polyamide PA 6T/6I und PA 6T/66 gearbeiteten Beispiele erreichen im Brandtest nach UL-94 für eine Probenkörperdicke von 0.4 und 0.8 mm je die Klassierung V0. Jedoch verursachen diese Formmassen bei der Verarbeitung eine nicht tolerierbare Korrosion an den mit der Schmelze in Kontakt stehenden Verarbeitungskomponenten, wie z.B. Gehäuse, Schnecken, Rückstromsperre und Düsen von Extrudern und Spritzgussmaschinen. Ohne die Korrosionswirkung deutlich zu reduzieren, können solche Formmassen nicht auf gängigen Verarbeitungsanlagen zu den gewünschten Formteilen umgeformt werden.

Die US-A-2009/0030124 bezieht sich ebenfalls auf halogenfrei flammgeschützte Polyamidformmassen auf Basis von teilaromatischen Polyamiden und Phosphinsäuresalzen. Die Korrosionswirkung der beschriebenen Formmassen soll durch das Additiv Zinkborat reduziert werden. In allen Beispielen enthalten die Formmassen neben Zinkborat zusätzlich das Mineral Boehmit in nicht unerheblichem Umfang. Versuche zeigen aber, dass weder Zinkborat noch Boehmit die Korrosionswirkung der flammgeschützten Formmasse wirklich zuverlässig reduzieren oder aufheben können.

Die Ursache der korrosiven Wirkung der halogenfrei flammgeschützten Polyamidformmassen wird häufig mit der bei hohen Temperaturen stattfindenden Zersetzung der Flammschutzmittel und der Säureeigenschaft der Zersetzungsprodukte in Verbindung gebracht. Vor diesem Hintergrund müssten insbesondere Agenzien mit basischem Charakter (Protonenakzeptoren) eine starke Reduktion der Korrosion bewirken, so z.B. Magnesiumhydroxid. Allerdings konnte aufgezeigt werden, dass auch Verbindungen mit hoher Alkalinität die Korrosionwirkung nur ungenügend unterdrücken. Hinzu kommt, dass diese Verbindungen auch die sichere Brandklassierung V0 gefährden, weil sie wahrscheinlich zu stark mit den eingesetzten halogenfreien Flammschutzmitteln wechselwirken.

Nur teure Spezialstähle widerstehen über längere Zeit den korrosiven Einflüssen der mit Phosphinsäuresalzen flammgeschützten Hochtemperaturpolyamide. Für viele Verarbeiter ist die Anschaffung solcher spezieller korrosionsfester Anlagenteile aber aufgrund der hohen Investitionskosten keine gangbare Lösung des Problems.

Die WO 2008/126381 betrifft halogenfrei flammengeschützte Polyamid-Formmassen mit guten mechanischen Eigenschaften und mit guten Fliesseigenschaften in Reflow-Schweissprozessen, die Lösung von Problemen in Zusammenhang mit Korrosion an Formen werden nicht erwähnt. Spezifisch offenbart werden teil-aromatische, hochschmelzende Polyamide auf Basis von Terephthalsäure mit einem jeweils hohen Anteil eines Metall-Phosphinats im Bereich von 19 Gewichtsprozent neben einer Glasfaserverstärkung von 30 %. Es wird vorgeschlagen, 0.05-1 Gewichtsprozent eines Metallsalzes einer Fettsäure zu einer solchen Formmasse hinzuzufügen.

Die US 2009/0030124 betrifft ebenfalls halogenfrei flammengeschützte Polyamid-Formmassen, wobei diese zusätzlich zu einem Metall-Phosphinat einen Anteil von ZinkBorat enthalten, mit der Begründung, dass dies die Korrosion in der Spritzgussform zu reduzieren in der Lage ist.

Die früher angemeldete aber später publizierte WO 2009/109318 (Art. 54(3) EPÜ) offenbart Verfahren zur Herstellung von flammengeschützten, nicht korrosiven Polyamid und Polyester-Formmassen, und es werden spezifische Phosphinsäuresalze in Kombination mit einem Metallsalz einer organischen Säure oder einer anorganischen MetallKomponente vorgeschlagen. In den spezifischen Beispielen wird im Zusammenhang mit einer Polyamid-Matrix nur die Verwendung von Natriumphosphit, Zinkstannat, Zinkcarbonat, Natriummontanat, Aluminiumstearat, Zinkborat, Natriumcarbonat, Zinkborophosphat und Hydrotalcit offenbart.

### DARSTELLUNG DER ERFINDUNG

Der Erfindung liegt demnach unter anderem die Aufgabe zugrunde, Formmassen auf Basis von hochschmelzenden, aliphatischen und/oder teilaromatischen Polyamiden bereit zu stellen, die mit einem halogenfreien Flammschutz ausgerüstet sind und bei der Verarbeitung zu Formteilen keine oder nur geringe Korrosion an Metallteilen der Verarbeitungsmaschinen verursachen. Die Formmassen sollen vorzugsweise gemäss der Brandschutzklassifizierung nach UL94 V0 (bei einer Probendicke von 0.4 und 0.8 mm) sein und eine ausreichende Fliessfähigkeit aufweisen, um auch dünnwandige Formteile in guter Qualität herstellen zu können. Im Hinblick auf die mechanischen Eigenschaften wird gefordert, dass die meist ohnehin nicht allzu ausgeprägte Reissdehnung der verstärkten Formmassen durch die Korrosions-Inhibierung nicht noch weiter reduziert wird.

Diese Aufgabe wird erfindungsgemäss gelöst durch die Polyamidformmassen gemäss Anspruch 1.

Spezifisch betrifft die vorliegende Erfindung also eine Polyamidformmasse auf Basis von teilkristallinen Polyamiden, bestehend aus
(A) wenigstens 30 Gew.-% wenigstens eines aliphatischen und/oder eines teilaromatischen, teilkristallinen Polyamids mit einer Schmelztemperatur (Tₘ) im Bereich von 240°C - 340°C, bevorzugt 270°C - 340°C, wobei die Schmelztemperatur (Tₘ) jeweils nach ISO-_Norm 11357-11-2 am Granulat mit Differential Scanning Calorimetry (DSC) mit einer Aufheizrate von 20 °C/min bestimmt ist;
(B) 0 - 50 Gew.-% wenigstens eines Füll- und Verstärkungsmittels;
(C) 8 - 16 Gew.-% wenigstens eines halogenfreier Flammschutzmittels;
(D) 0.1 - 2.0 Gew.-% wenigstens eines Bariumcarboxylats;
(E) 0 - 5 Gew.-% wenigstens eines Additivs.

Dabei ergeben die Gewichtsprozente der Komponenten A bis E zusammen 100%.

Die Komponente A besteht also entweder aus den angegebenen Gew.-% wenigstens eines aliphatischen teilkristallinen Polyamids mit einer Schmelztemperatur (Tₘ) im Bereich von 240°C - 340°C, bevorzugt 270°C - 340°C; oder aus den angegebenen Gew.-% wenigstens eines teilaromatischen, teilkristallinen Polyamids mit einer Schmelztemperatur (Tₘ) im Bereich von 240°C - 340°C, bevorzugt 270°C - 340°C; oder aber auch aus einer Mischung solcher Systeme, d.h. den angegebenen Gew.-% einer Mischung aus wenigstens einem aliphatischen teilkristallinen Polyamid und wenigstens einem teilaromatischen teilkristallinen Polyamid, jeweils mit einer Schmelztemperatur (Tₘ) im definierten Bereich. Bevorzugt ist dabei aber jene Situation, bei welcher die Komponente A im wesentlichen ausschließlich, insbesondere bevorzugt vollständig ausschließlich, aus einem teilaromatischen, teilkristallinen Polyamids mit einer Schmelztemperatur (Tₘ) im Bereich von 240°C - 340°C, bevorzugt 270°C - 340°C gebildet wird.

Es wurde unerwarteterweise, wie dies durch die ausführlichen Ausführungsbeispiele eindrücklich dokumentiert wird, gefunden, dass diese spezifische Auswahl der Komponente D als Bariumcarboxylat (und/oder alternativ die Auswahl der Komponente C als Bariumphosphinat) besondere Vorteile hinsichtlich der Korrosion aufweist. Unerwarteterweise ist dabei nämlich die besondere Wirkung der Komponente D nicht mit dem Carboxylat allein erklärbar, denn Carboxylate mit anderen Kationen wie beispielsweise Magnesium zeigen die erfindungsgemäße Wirkung nicht. Unerwarteterweise ist aber andererseits die besondere Wirkung der Komponente D auch nicht mit dem Barium-Kation allein erklärbar, so sind nämlich anorganische Bariumverbindungen wie beispielsweise Bariumcarbonat nicht im Sinne der Erfindung wirksam. Nur die spezifische Kombination von Barium-Kationen entweder mit einem organischen Carboxylat (Komponente D) oder mit einem Phoshinat zeigen die überraschende und unerwartete Wirkung hinsichtlich der Verhinderung der Korrosion ohne das Brandverhalten und die mechanischen Eigenschaften negativ zu beeinflussen.

Das halogenfreie Flammschutzmittel der Komponente C kann auf Basis eines Bariumphosphinats ausgebildet sein, wobei das halogenfreie Flammschutzmittel ein Salz eines Phosphinats oder eines Diphosphinats ist (für mögliche bevorzugte Systeme vergleiche weiter unten), wobei wenigstens 50 Mol-%, bevorzugt wenigstens 75 Mol-%, insbesondere bevorzugt wenigstens 95 Mol-%, und ganz besonders bevorzugt im wesentlichen die Gesamtheit der Kationen durch Barium gegeben ist, und der verbleibende Teil durch andere Metallionen der zweiten oder dritten Haupt- oder Nebengruppe des Periodensystems.

Der Anteil an Komponente D lässt sich alternativ auch auf die Komponente C beziehen, insbesondere dann, wenn die Komponente C durch ein Phosphinat oder ein Diphosphinat gegeben ist. Die Anteile der Komponenten A, B, sowie E bleiben bei dieser Betrachtungsweise gleich wie oben angegeben, der Anteil der Komponente C macht dann 8-20 Gew.-% der Gesamtmasse aus. Die Gewichtsprozente der Komponenten A, B, C und E ergeben bei dieser Betrachtungsweise zusammen 100 %. Innerhalb dieser Komponente C kann dann ein gewisser Anteil dieser Komponente durch D ersetzt sein, namentlich können 1.25-10.0 Gew.-% der Komponente C durch D ersetzt sein, vorzugsweise 2.50-7.50 Gew.-%, insbesondere vorzugsweise 3.75-5.00 Gew.-%.

Bei einer solchen halogenfrei flammgeschützten Polyamidformmasse ist, wenn mittels einer Spritzgussmaschine verarbeitet, der Korrosionsverschleiss, bestimmt mittels der DKI-Plättchenmethode, 50%, bevorzugt 70%, und insbesondere bevorzugt 80% gegenüber den Formmassen ohne Komponente D respektive ohne Bariumphosphinat reduziert. Konkret bedeutet dies, dass in einem Korrosionstest, wie er weiter unten ausführlich dokumentiert ist, Werte von weniger als 30 mg, bevorzugt von weniger als 20 mg, insbesondere bevorzugt von weniger als 15 mg erreicht werden können, und in der Regel sogar höchstens 10 mg oder noch weniger möglich sind.

Die Formmassen sind zudem bevorzugtermassen dadurch gekennzeichnet, dass sie gemäss der Brandschutzklassifizierung nach UL94 klassifiziert sind als V0, dies bei einer Probendicke von 0.4 und 0.8 mm.

Die erfindungsgemässen Polyamidformmassen bestehen also aus mindestens einem hochschmelzenden Polyamid (Komponente A, bevorzugt auf Basis eines Polyphthalamids), einem halogenfreien Flammschutzmittel (Komponente C), Füll- und/oder Verstärkungsmitteln (Komponente B), einem korrosionshemmenden Flammschutzmittel oder korrosionshemmenden Zusatzstoff (Komponente D) sowie gegebenenfalls Stabilisatoren und weiteren Additiven (Komponente E). Gemäss einer bevorzugten Ausführungsform handelt es sich bei der Komponente B wenigstens teilweise um Glas- und/oder Kohlenstofffasern.

Eine wesentliche Komponente der erfindungsgemässen Polyamidformmassen ist der sogenannte Korrosionsstabilisator, ein Bariumcarboxylat (Komponente D). Der Anteil der Komponente D in der Polyamidformmasse liegt im Bereich von 0.1-2.0 Gew.-%, bevorzugt im Bereich von 0.2 - 1.5 Gew.-%, insbesondere bevorzugt im Bereich von 0.3 bis 1.0 Gew.-%. Oder alternativ in Bezug auf die Komponente C (typischerweise das eingesetzte Phospinat, das die Korrosion hauptsächlich bewirkt) berechnet,, ist Komponente D in einem Gewichtsanteil von 1.25 - 10.0 %, bevorzugt von 2.50 - 7.50 % und ganz bevorzugt von 3.75 - 5.00 %, jeweils bezogen auf die Konzentration der Komponente C, in der Formmasse enthalten.

Dies bevorzugtermassen in Kombination mit einem konventionellen halogenfreien Flammschutzmittel innerhalb der Komponente C, das heißt in einer Situation, wo die Komponente C nicht im wesentlichen durch ein Bariumphosphinat gegeben ist.

Bariumcarboxylate sind die Salze der ein- und mehrwertigen Carbonsäuren mit Barium. Es handelt sich also bei den Bariumcarboxylaten um organische Salze von Barium. Grundsätzlich können dabei als Antionen Monocarboxylate wie beispielsweise Laurat eingesetzt werden, aber auch Polycarboxylate, so also auch Dicarboxylate wie beispielsweise Tartrat (Weinsäure), Tricarboxylate wie Citrat (Zitronensäure), etc.

Für den Fall der Monocarboxylate und Dicarboxylate, den bevorzugten Systemen, haben die Bariumcarboxylate die allgemeine Formel

R-(CO₂)ₙBa_{n/2},

wobei R für H, Alkyl (linear und/oder verzweigt; gesättigt und/oder ungesättigt; substituiert oder unsubstituiert), Aryl, Cycloalkyl- oder auch für die C-C-Bindung zwischen zwei Carboxylgruppen (Oxalsäure) steht.

Geeignete Monocarbonsäuren für die Herstellung der Bariumcarboxylate sind: Ameisen-, Essig-, Propion-, Butter-, Valerian-, Capron-, Önanth-, Capryl-, Pelargon-, Caprin-, Laurin-, Myristin-, Palmitin-, Margarin-, Stearin-, Hydroxystearin-, Öl-, Arachin-, Behen-, Eruca-, Lignocerin-, Cerotin-, Montan-, Melissinsäure, 2-Ethylhexylcarbonsäure, Ricinoleinsäure oder Mischungen solcher Systeme.

Bevorzugte Systeme sind also unter anderem Fettsäuren. Sie können dabei gesättigt, ungesättigt oder teilweise ungesättigt oder auch einfach oder mehrfach substituiert sein. Diese liegen, wenn sie aus nachwachsenden Quellen stammen oder auch aus Synthesen häufig als Gemische vor. So typischerweise als Gemische von Systemen mit gerader Zahl von Kohlenstoffatomen. Entsprechend kann das Bariumcarboxylat gemäß einer weiteren bevorzugten Ausführungsform entweder Bariumlaurat (C12), Bariummyristat (C14), Bariumpalmitat (C16) oder Bariumstearat (C18) sein, es kann aber auch eine Mischung sein mit einer Verteilung, so beispielsweise ein Gemisch im wesentlichen aus Bariumpalmitat mit zusätzlichen Anteilen von Bariumlaurat, Bariummyristat, und Bariumstearat, vielleicht sogar noch mit Anteilen von Bariumarachinat (C20).

Geeignete Dicarbonsäuren sind: Oxalsäure, Malonsäure, Maleinsäure, Bernsteinsäure, Äpfelsäure, Weinsäure, Glutarsäure, Adipinsäure, Azelainsäure, Sebazinsäure, Undecan-, Dodecan-, Tridecan-, Tetradecan-, Pentadecan-, Hexandecan-, Heptadecan-, Octadecan-, Nonadecan- und Eicosandisäure, C36-Dimerfettsäure.

Bevorzugt im Rahmen der Komponente D eingesetzt werden die Bariumsalze der Monocarbonsäuren, wie z.B. Bariumlaurat, Bariumpalmitat und Bariumstearat, besonders bevorzugt eingesetzt wird Bariumstearat, wie z.B. LIGA Bariumstearat (Peter Greven Fett-Chemie GmbH & Co.KG, DE) oder reines Bariumstearat, sowie insbesondere Bariumlaurat, wie z.B. LIGA Bariumlaurat (Peter Greven Fett-Chemie GmbH & Co.KG, DE).

Allgemeiner formuliert ist also gemäß einer bevorzugten Ausführungsform die Polyamidformmasse dadurch gekennzeichnet, dass das Bariumcarboxylat der Komponente D die allgemeine Formel

Ba(CO₂-R₁)₂

aufweist, wobei R₁ ausgewählt ist aus der Gruppe: H, Alkyl, Aryl, Cycloalkyl, oder einer Mischung davon, bevorzugt mit 1-36 Kohlenstoffatomen, insbesondere bevorzugt auf Basis von Ameisen-, Essig-, Propion-, Butter-, Valerian-, Capron-, Önanth-, Capryl-, Pelargon-, Caprin-, Laurin-, Myristin-, Palmitin-, Margarin-, Stearin-, Hydroxystearin-, Öl-, Arachin-, Behen-, Eruca-, Lignocerin-, Cerotin-, Montan-, Melissinsäure, 2-Ethylhexylcarbonsäure, Ricinoleinsäure oder einer Mischung davon,
oder dass das Bariumcarboxylat der Komponente (D) die allgemeine Formel

Ba((CO₂)₂-R)

aufweist, wobei R ausgewählt ist aus der Gruppe: H, Alkyl, Aryl, Cycloalkyl, oder einer Mischung davon, bevorzugt mit 1-36 Kohlenstoffatomen, insbesondere bevorzugt auf Basis von Oxalsäure, Bernsteinsäure, Weinsäure, Glutarsäure, Adipinsäure, Azelainsäure, Sebazinsäure, Undecan-, Dodecan-, Tridecan-, Tetradecan-, Pentadecan-, Hexandecan-, Heptadecan-, Octadecan-, Nonadecan- und Eicosandisäure, C36-Dimerfettsäure, oder eine Mischung davon. Ebenfalls möglich sind dimerisierte Fettsäuren mit bis zu 44 Kohlenstoffatomen.

Bevorzugtermassen beruht das Bariumcarboxylat auf Basis einer linearen, vorzugsweise (vollständig) gesättigten Fettsäure mit 12, 14, 16, 18 oder 20 Kohlenstoffatomen oder auf Basis einer Mischung solcher Fettsäuren, wobei das Bariumcarboxylat vorzugsweise ausgewählt ist aus der Gruppe: Bariumlaurat, Bariumpalmitat, Bariummyristat, Bariumstearat oder einer Mischung solcher Systeme.

Als zusätzliche Stabilisatoren, die gewissermaßen als Synergisten zur Komponente D auftreten können, können andere Systeme beigegeben werden, welche weiter unten im Zusammenhang mit den Additiven diskutiert werden.

Die erfindungsgemäß eingesetzte Matrix der Polyamidformmassen basiert auf mindestens einem hochschmelzenden Polyamid (Komponente A), welches einen Schmelzpunkt im Bereich von 240°C - 340°C, bevorzugt von 270°C bis 340°C und besonders bevorzugt von 280°C bis 330°C aufweist.

Bevorzugtermassen ist der Anteil der Komponente A im Bereich von 40-80 Gew.-%.

Wie bereits oben erwähnt kann die Komponente A sowohl auf wenigstens einem aliphatischen als auch wenigstens einem teilaromatischen teilkristallinen Polyamid mit dem angegebenen Schmelzpunktbereich beruhen. Ebenfalls möglich sind Mischungen aus derartigen Systemen, wobei bevorzugtermassen diese Mischungen in der Hauptsache aus wenigstens einem teilaromatischen teilkristallinen Polyamid beruhen.

Die erfindungsgemässen aliphatischen Polyamide für die Komponente A mit dem angegebenen Schmelzpunktbereich sind ausgewählt aus der Gruppe: PA 46, PA 46/66, PA 46/56, PA 66 und PA 56/66. Darunter ist PA 46 bevorzugt, gegebenenfalls in Mischung mit einem teilkristallinen teilaromatischen Polyamid.

Gemäß einer weiteren bevorzugten Ausführungsform ist dabei das teilaromatische, teilkristalline Polyamid der Komponente A, bevorzugtermassen dann, wenn die Komponente A im wesentlichen nur durch wenigstens ein teilkristallines teilaromatisches Polyamid gebildet wird, aufgebaut aus:
(A1) 25 - 100 Mol-% Terephthalsäure, bezogen auf den Gesamtgehalt an anwesenden Säuren,
   0 - 75 Mol-%, bezogen auf den Gesamtgehalt an anwesenden Säuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 25 - 100 Mol-%, bezogen auf den Gesamtgehalt an anwesenden Diaminen, wenigstens eines aliphatischen Diamins mit 4 bis 36 Kohlenstoffatomen,
   0- 75 Mol-%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin,
   wobei der prozentuale Molgehalt an Dicarbonsäuren 100% und der prozentuale Molgehalt an Diaminen 100% ausmacht,
   sowie aus:
   (A3) 0 - 100 Mol-% Aminocarbonsäuren und/oder Lactame mit 6 bis 12 Kohlenstoffatomen.

Dies mit der Maßgabe, dass die Konzentration von A3 höchstens 40 Gew.-%, bevorzugt höchstens 30 Gew.-%, insbesondere höchstens 20 Gew.-% bezogen auf die Summe von (A1) bis (A3) ausmacht.

Das hochschmelzende Polyamid (Komponente A) hat gemäß einer bevorzugten Ausführungsform eine Lösungsviskosität, gemessen in m-Kresol (0,5 Gew.-%, 20°C) von ηᵣₑₗ kleiner 2,6, bevorzugt von ηᵣₑₗ kleiner 2,3, insbesondere von ηᵣₑₗ kleiner 2,0 und von ηᵣₑₗ wenigstens 1,4, bevorzugt von ηᵣₑₗ wenigstens 1,5, insbesondere von ηᵣₑₗ wenigstens 1,6.

Bevorzugtermassen beruht also die Komponente A auf einem Polyphthalamid. Polyphthalamide sind Polyamide auf Basis von Terephthalsäure und aliphatischen oder cycloaliphatischen Diaminen und gegebenenfalls weiteren aliphatischen, cycloaliphatischen oder aromatischen Dicarbonsäuren sowie Lactamen und/oder Aminocarbonsäuren.

In Frage kommt als hochschmelzendes Polyamid generell ein Polyamid auf Basis von aromatischen Dicarbonsäuren und aliphatischen Diaminen. Ein Teil der aromatischen Dicarbonsäuren kann durch aliphatische und/oder cycloaliphatische Dicarbonsäuren, ein Teil der aliphatischen Diamine kann durch cycloaliphatische und/oder aralphatische Diamine ersetzt werden. Ein teilweiser Ersatz der Dicarbonsäuren und der Diamine kann auch durch Lactame und/oder Aminocarbonsäuren erfolgen.

Somit werden die hochschmelzenden Polyamide bevorzugtermassen aus folgenden Komponenten gebildet:
(A1) Dicarbonsäuren:
   50 - 100 Mol-% Terephthalsäure, bezogen auf den Gesamtgehalt an anwesenden Säuren,
   0 - 50 Mol-%, bezogen auf den Gesamtgehalt an anwesenden Säuren, einer anderen aromatischen Dicarbonsäure mit 8 bis 20 Kohlenstoffatomen, und/oder einer aliphatischen Dicarbonsäure mit 6 bis 36 Kohlenstoffatomen, und/oder einer cycloaliphatischen Dicarbonsäure mit 8 bis 20 Kohlenstoffatomen, oder einer Mischung solcher Systeme
(A2) Diamine:
   50 - 100 Mol-% mindestens eines aliphatischen Diamins mit 4 bis 36 Kohlenstoffatomen, bezogen auf den Gesamtgehalt an anwesenden Diaminen,
   0- 50 Mol-% cycloaliphatische Diamine mit 6 bis 20 Kohlenstoffatomen, und/oder araliphatische Diamine, wie z.B. MXDA und PXDA, oder einer Mischung solcher cycloaliphatischer oder araliphatischer Systeme,
wobei in den hochschmelzenden Polyamiden der prozentuale Molgehalt an Dicarbonsäuren 100% und der prozentuale Molgehalt an Diaminen 100% ausmacht, und, gegebenenfalls, aus:
(A3) Aminocarbonsäuren und/oder Lactamen, enthaltend 0 - 100 Mol-% Lactame mit 6 bis 12 Kohlenstoffatomen, und/oder Aminocarbonsäuren mit 6 bis 12 Kohlenstoffatomen.

Während die Komponenten A1 und A2 weitgehend äquimolar eingesetzt werden, beträgt die Konzentration von A3 auf jeden Fall höchstens 40 Gew.-%, bevorzugt höchstens 30 Gew.-%, insbesondere höchstens 20 Gew.-% bezogen auf die Summe von A1 bis A3.

Zusätzlich zu den weitgehend äquimolar eingesetzten Komponenten A1 und A2 können Dicarbonsäuren A1 oder Diamine A2 zur Regelung der Molmasse oder zum Ausgleich von Monomerverlusten bei der Polyamidherstellung eingesetzt werden, sodass in ihrer Gesamtheit die Konzentration einer Komponente A1 oder A2 überwiegen kann.

Ein Teil der Terephthalsäure (TPS), konkret bis zu 50 Mol-%, bevorzugt bis zu 48 Mol-% und insbesondere bis zu 46 Mol-%, kann durch andere aromatische, aliphatische oder cycloaliphatische Dicarbonsäuren mit 6 bis 36 Kohlenstoffatomen (bezogen auf die Gesamtmenge der Dicarbonsäuren) ersetzt sein.

Zu den geeigneten aromatischen Dicarbonsäuren zählen die Naphthalindicarbonsäure (NDA) und die Isophthalsäure (IPS).

Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Geeignete cycloaliphatische Dicarbonsäuren sind die cis- und/oder trans-Cyclohexan-1,4-dicarbonsäure und/oder cis- und/oder trans-Cyolohexan-1,3-dicarbonsäure (CHDA).

Die als Komponente A2 zu 50 - 100 Mol-% eingesetzten Diamine sind bevorzugtermassen ausgewählt aus der Gruppe 1,4-Butandiamin, 1,5-Pentandiamin, 1,6-Hexandiamin, 2-Methyl-1,5-pentandiamin (MPD), 1,7-Heptandiamin, 1.8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin. Hiervon bevorzugt sind die Diamine 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin.

Die oben genannten aliphatischen Diamine können in untergeordneter Menge, das heißt konkret von nicht mehr als 50 Mol-%, von vorzugsweise nicht mehr als 40 Mol-% und insbesondere nicht mehr als 30 Mol-%, jeweils bezogen auf die Gesamtmenge der Diamine) durch andere Diamine ersetzt werden.

Als cycloaliphatische Diamine können vorzugsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP) und 3,3'-Dimethyl-4,4'-diaminodicyclohexylmethan (MACM) verwendet werden.

Als araliphatisches Diamine können vorzugsweise m-Xylylendiamin (MXDA) und p-Xylylendiamin (PXDA) eingesetzt werden.

Zusätzlich zu den beschriebenen Dicarbonsäuren und Diaminen können noch Lactame und/oder Aminocarbonsäuren als polyamidbildende Komponenten (Komponente A3) in einem gewissen beschränkten Umfang eingesetzt werden. Geeignete Verbindungen sind vorzugsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten A1 und A2 eingesetzten Aminocarbonsäuren und/oder Lactame beträgt dabei aber höchstens 40 Gew.-%, bevorzugt höchstens 30 Gew.-% und besonders bevorzugt höchstens 20 Gew.-% bezogen auf die Summe der Komponenten A1 und A2.

Speziell bevorzugte Lactame sind Lactame bzw. α,ω-Aminosäuren mit 4, 6, 7, 8, 11 oder 12 C-Atomen. Dies sind beispielsweise die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Weil Diamine flüchtigere Verbindungen als Dicarbonsäuren sind, entsteht beim Herstellprozess typischerweise ein Diaminverlust. Zum Ausgleich des Diaminverlustes wird deshalb bevorzugt dem Monomeransatz ein Diaminüberschuß von 1 bis 8 Gew.-% bezogen auf die Gesamtmenge der Diamine zugesetzt. Mit dem Diaminüberschuß wird auch das Molekulargewicht und die Verteilung der Endgruppen geregelt.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die bevorzugte Einsatzmenge der Regler liegt zwischen 10 und 200 mmol pro kg Polymer.

Die teilaromatischen Copolyamide (A) können mit an sich bekannten Verfahren hergestellt werden. Geeignete Verfahren sind an verschiedener Stelle beschrieben worden, und in der Folge sollen einige der möglichen Verfahren angegeben werden, der Offenbarungsgehalt der nachfolgend genannten Patent-Dokumente wird hinsichtlich des Verfahrens zur Herstellung des Copolyamids der Komponente A der vorliegenden Erfindung ausdrücklich in den Offenbarungsgehalt der vorliegenden Anmeldung eingeschlossen: DE 195 13 940, EP 0 976 774, EP 0 129 195, EP 0 129 196, EP 0 299 444, US 4,831,106, US 4,607,073, DE 14 95 393 und US 3,454,536.

Zur Herstellung der Komponente A geeignet ist vorzugsweise die zweistufige Herstellung zuerst eines tiefviskosen, niedermolekularen Vorkondensats und mit anschließender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es zum Beispiel in DE 696 30 260 angegeben ist, deren Offenbarungsgehalt diesbezüglich ebenfalls mit eingeschlossen sein soll.

Für Produkte mit Schmelzpunkten unter 300°C eignet sich auch das in der US 3,843,611 und US 3,839,296 beschriebene und diesbezüglich ebenfalls mit eingeschlossene, einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

Allgemein formuliert ist also eine bevorzugte Ausführungsform der Polyamidformmasse hinsichtlich der Komponente A1 dadurch gekennzeichnet, dass die von Terephthalsäure verschiedene Dicarbonsäure der Komponente A1 ausgewählt ist aus der Gruppe: Naphthalindicarbonsäure, Isophthalsäure, Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimerfettsäure (C36), cis- und/oder trans-Cyclohexan-1,4-dicarbonsäure, cis- und/oder trans-Cyolohexan-1,3-dicarbonsäure respektive Mischungen davon.

Eine bevorzugte Ausführungsform der Polyamidformmasse hinsichtlich der Komponente A2 ist dadurch gekennzeichnet, dass das aliphatische Diamin der Komponente A2 ausgewählt ist aus der Gruppe: 1,4-Butandiamin, 1,5-Pentandiamin, 1,6-Hexandiamin, 2-Methyl-1,5-pentandiamin, 1,7-Heptandiamin, 1,8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin oder eine Mischung davon, wobei folgende Gruppe bevorzugt ist: 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin, oder eine Mischung davon.

Eine weitere bevorzugte Ausführungsform der Polyamidformmasse hinsichtlich der Komponente A2 ist dadurch gekennzeichnet, dass das cycloaliphatische respektive araliphatische Diamin der Komponente A2 ausgewählt ist aus der Gruppe: Cyclohexandiamin, 1,3-Bis-(Aminomethyl)-cyclohexan, Isophorondiamin, Norbornandimethylamin, 4,4'-Diaminodicyclohexylmethan, 2,2-(4,4'-Diaminodicyclohexyl)propan und 3,3'-Dimethyl-4,4'-diaminodicyclohexylmethan, m-Xylylendiamin und p-Xylylendiamin, oder eine Mischung davon.

Eine weitere bevorzugte Ausführungsform der Polyamidformmasse hinsichtlich der Komponente A3 ist dadurch gekennzeichnet, dass die Komponente A3 ausgewählt ist aus der Gruppe: Caprolactam, α,ω-Aminocapronsäure, α,ω-Aminononansäure, α,ω-Aminoundecansäure, Laurinlactam α,ω-Aminododecansäure, α,ω-Aminosäuren mit 4, 6, 7, 8, 11 oder 12 C-Atomen, insbesondere Pyrrolidin-2-on, ε-Caprolactam, Önanthlactam, Capryllactam, Laurinlactam, 1,4-Aminobutansäure, 1,6-Aminohexansäure, 1,7-Aminoheptansäure, 1,8-Aminooctansäure, 1,11-Aminoundecansäure und 1,12-Aminododecansäure oder eine Mischung davon.

Konkrete Vertreter für die erfindungsgemäßen teilaromatischen Polyamide sind beispielsweise folgende Systeme oder Mischungen (Blends) davon: PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/10T, PA 6T/10I, PA 6T/106, PA 6T/1010, PA 6T/66/106, PA 10T/1010, PA 10T/1012, PA 10T/10I, PA10T/12, PA10T/11, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/9T, PA 6T/12T, PA 6T/6I/66, PA 6T/6I/6, PA 6T/6I/12, PA 6T/66/6, PA 6T/66/12, PA 6T/6I/MACMI, PA 6T/66/PACM6.

Gemäß einer bevorzugten Ausführungsform macht der Anteil an Terephthalsäure in der Komponente A1 wenigstens 50 Mol-% aus, vorzugsweise wenigstens 52 Mol-%, insbesondere vorzugsweise wenigstens 54 Mol-%, und ganz besonders bevorzugt wenigstens 62 Mol-%, wobei bevorzugtermassen die Komponente A2 ausschließlich aus Hexamethylendiamin besteht oder ausschließlich aus 2-Methyl-1,5-Pentandiamin oder ausschließlich aus einer Mischung aus Hexamethylendiamin und 2-Methyl-1,5-Pentandiamin.

Erfindungsgemäß sind also als hochschmelzende Polyamide A, insbesondere folgende teilaromatische Copolyamide bevorzugt:
- teilkristallines Polyamid, hergestellt aus mindestens 50 Mol-% Terephthalsäure und Hexamethylendiamin, als einzige Diaminkomponente;
- teilkristallines Polyamid, hergestellt aus mindestens 52 Mol-% Terephthalsäure und Hexamethylendiamin;
- teilkristallines Polyamid, hergestellt aus mindestens 54 Mol-% Terephthalsäure und Hexamethylendiamin;
- teilkristallines Polyamid, hergestellt aus mindestens 62 Mol-% Terephthalsäure und Hexamethylendiamin;
- teilkristallines Polyamid, hergestellt aus mindestens 50 Mol-% Terephthalsäure und 2-Methyl-1,5-pentandiamin;
- teilkristallines Polyamid, hergestellt aus mindestens 50 Mol-% Terephthalsäure und einer Mischung aus Hexamethylendiamin und 2-Methyl-1,5-pentandiamin.

Gemäß einer weiteren bevorzugten Ausführungsform macht der Anteil an Terephthalsäure in der Komponente A1 wenigstens 50 Mol-% aus, wobei innerhalb der Komponente A2 das aliphatische Diamin Hexamethylendiamin in einem Anteil von wenigstens 10 Mol-%, bevorzugt wenigstens 50 Mol-%, umfasst, und dass der verbleibende Anteil an Diamin ausgewählt ist aus der Gruppe: Nonandiamin, Methyloctandiamin, Decandiamin, Dodecandiamin, Trimethyl-hexamethylendiamin, m-Xylylendiamin, Bis-(4-aminocyclohexyl)-methan, Bis-(4-amino-3-methyl-cyclohexyl)-methan, oder eine Mischung davon, wobei vorzugsweise aus dieser Gruppe nur ein System in einer Mischung mit Hexamethylendiamin eingesetzt wird.

Erfindungsgemäß sind also als hochschmelzende Polyamide A, weiter insbesondere folgende teilaromatische Copolyamide bevorzugt:
- teilkristallines Polyamid, hergestellt aus mindestens 50 Mol-% Terephthalsäure und einer Mischung aus mindestens zwei Diaminen, ausgewählt aus der Gruppe Hexamethylendiamin, Nonandiamin, Methyloctandiamin, Decandiamin und Dodecandiamin, wobei mindestens 10 Mol-%, bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Decandiamin, wobei mindestens 10 Mol-%, bevorzugt mindestens 15 Mol-%, insbesondere bevorzugt wenigstens 50 Mol-%, Hexamethylendiamin, bezogen auf den Gesamtdiamingehalt, eingesetzt wird;
- teilkristallines Polyamid, hergestellt aus mindestens 80 Mol-%, bevorzugt 100 Mol-% Terephthalsäure und aus 10 - 60 Mol-% Hexamethylendiamin und 40 - 90 Mol-% Decandiamin,
- teilkristallines Polyamid, hergestellt aus mindestens 50 Mol-% Terephthalsäure und einer Mischung aus Hexamethylendiamin und Trimethylhexamethylendiamin, wobei mindestens 10 Mol-%, bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und m-Xylylendiamin, wobei mindestens 10 Mol-%, bevorzugt wenigstens 50 Mol-%, Hexamethylendiamin, bezogen auf den Gesamtdiamingehalt, eingesetzt wird;
- teilkristallines, Polyamid hergestellt aus mindestens 50 Mol-% Terephthalsäure und einer Mischung aus Hexamethylendiamin und Bis-(4-aminocyclohexyl)-methan, wobei mindestens 10 Mol-%, bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Bis-(4-amino-3-methyl-cyclohexyl)-methan, wobei mindestens 10 Mol-%, bevorzugt wenigstens 50 Mol-%, Hexamethylendiamin, bezogen auf den Gesamtdiamingehalt, eingesetzt wird.

Eine weitere bevorzugte Ausführungsform der Polyamidformmasse ist dadurch gekennzeichnet, dass die Komponente A gebildet wird durch ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten.

Erfindungsgemäß sind also als hochschmelzende Polyamide A, weiter insbesondere folgende teilaromatische Copolyamide bevorzugt:
- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten.

Eine weitere bevorzugte Ausführungsform der Polyamidformmasse ist dadurch gekennzeichnet, dass die Komponente A gebildet wird durch ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 50 bis 65 Mol-% Hexamethylenterephthalamid-Einheiten und 35 bis 50 Mol-% Hexamethylenadipamid-Einheiten insbesondere vorzugsweise mit 52 bis 62 Mol-% Hexamethylenterephthalamid-Einheiten und 38 bis 48 Mol-% Hexamethylenadipamid.

Erfindungsgemäß sind also als hochschmelzende Polyamide A, zudem insbesondere folgende teilaromatische Copolyamide bevorzugt:
- teilkristallines Polyamid 6T/66 mit 50 bis 80 Mol-% Hexamethylenterephthalamid-Einheiten und 20 bis 50 Mol-% Hexamethylenadipamid (66)-Einheiten;
- teilkristallines Polyamid 6T/66 mit 50 bis 65 Mol-% Hexamethylenterephthalamid-Einheiten und 35 bis 50 Mol-% Hexamethylenadipamid (66)-Einheiten;
- teilkristallines Polyamid 6T/66 mit 52 bis 62 Mol-% Hexamethylenterephthalamid-Einheiten und 38 bis 48 Mol-% Hexamethylenadipamid (66)-Einheiten;
- teilkristallines Polyamid 6T/66 mit 55 Mol-% Hexamethylenterephthalamid-Einheiten und 45 Mol-% Hexamethylenadipamid (66)-Einheiten.

Die Komponente A kann, gemäß einer weiteren bevorzugten Ausführungsform, auch durch ein teilkristallines ternäres Polyamid gebildet sein.

Entsprechend ist weiter bevorzugt, Dass die Komponente A gebildet wird durch ein teilkristallines ternäres Polyamid 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten.

Ebenfalls bevorzugt ist, dass die Komponente A gebildet wird durch ein 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH₂)ₙ-1-CO-, wobei n = 6, 11 oder 12 ist.

Ebenfalls bevorzugt ist, dass die Komponente A gebildet wird durch ein 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel-NH-(CH₂)ₙ-1-CO-, wobei n gleich 6, 11 oder 12 ist.

Ebenfalls bevorzugt ist, dass die Komponente A gebildet wird durch ein 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel -NH-(CH₂)ₙ-1-CO-, wobei n gleich 6, 11 oder 12 ist.

Ebenfalls bevorzugt ist, dass die Komponente A gebildet wird durch ein 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH₂)ₙ₋₁-CO-, wobei n gleich 6, 11 oder 12 ist.

Wie bereits eingangs erläutert kann die Komponente A auch eine Mischung (Blend) sein. Gemäß einer weiteren bevorzugten Ausführungsform werden basiert die Komponente A auf Mischungen aus amorphem Polyamid 6T/6I mit höchstens 40 Mol-% Hexamethylenterephthalamid-Einheiten und mindestens 60 Mol-% Hexamethylenisophthalamid-Einheiten und einem Überschuss von teilkristallinem Polyamid 6T/6I oder 6T/66 mit mindestens 52 Mol-% Hexamethylenterephthalamid-Einheiten eingesetzt.

Gemäß einer weiteren bevorzugten Ausführungsform basiert die Komponente A auf einem teilaromatischen und teilkristallinen Polyamid, das bis zu 26 Mol-% aliphatische Einheiten enthält, die durch Kondensation von dimerisierten Fettsäuren mit bis zu 44 Kohlenstoffatomen und einem aliphatischen oder cycloaliphatischen Diamin, insbesondere mit Hexamethylendiamin herstellbar sind.

Als Komponente B können die erfindungsgemässen Formmassen 0 - 50 Gew.-%, bevorzugt zwischen 1-50 Gew.-%, oder 1-40 Gew.-% oder 10 und 40 Gew.-% und ganz besonders bevorzugt zwischen 20 und 40 Gew.-% an faser- oder teilchenförmigen Füllstoffen oder deren Mischungen enthalten.

Gemäß einer weiteren bevorzugten Ausführungsform ist also die Polyamidformmasse dadurch gekennzeichnet, dass der Anteil an Komponente B im Bereich von 10 bis 40 Gew.-% liegt, vorzugsweise im Bereich von 20-40 Gew.-%.

Generell handelt es sich bei der Komponente B vorzugsweise um faser- oder teilchenförmige Füllstoffe oder deren Mischungen.

Faserförmige Füllstoffe sind generell vorzugsweise ausgewählt aus der Gruppe Glasfasern, Kohlenstofffasern, Aramidfasern, Kaliumtitanatwhisker.

Die Füllstoffe liegen bevorzugtermassen in Form endloser Stränge oder in geschnittener Form, insbesondere in Form von Kurzglasfasern vor.

Vorzugsweise sind die Füllstoffe mit einer Schlichte und/oder einem Haftvermittler ausgerüstet.

Bevorzugt werden als Füllstoffe der Komponente B Glasfasern aus E-Glas eingesetzt.

Generell können Fasern der Komponente B einen kreisförmigen Querschnitt aufweisen oder einen nicht-kreisförmigen Querschnitt, wobei auch Mischungen von solchen Systemen eingesetzt werden können.

Bevorzugt werden im Fall von runden Fasern solche mit einen Durchmesser von 5 bis 20 µm, bevorzugt von 5 bis 15 µm und besonders bevorzugt von 7 bis 12 µm eingesetzt.

Bevorzugt werden im Fall von flachen Fasern solche eingesetzt, welche ein Verhältnis der senkrecht aufeinander stehenden Querschnittsachsen größer oder gleich 2 aufweisen, und deren kleinere Querschnittsachse einer Länge von ≥ 3 µm aufweist.

Als Beispiele für faserförmige Füllstoffe seien also faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den teilaromatischen Polyamiden können die verwendeten Glasfasern mit einer Schlichte und einem Haftvermittler ausgerüstet sein.

Die Glasfasern bestehen dabei bevorzugt aus E-Glas. Es können aber auch alle anderen Glasfasersorten, wie z.B. A-, C-, D-, M, S-, R-Glasfasern oder beliebige Mischungen davon oder Mischungen mit E-Glasfasern eingesetzt werden. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, Aminosilan oder Epoxysilan, ausgerüstet sein können. Bevorzugt wird Schnittglas, sogenannte Kurzglasfasern aus E- oder S-Glas, verwendet.

Geeignete Glasfasern sind sowohl Glasfasern mit kreisförmigem Querschnitt (runde Glasfasern) als auch Glasfasern mit nicht-kreisförmigen Querschnitt (flache Glasfasern). Die runden Glasfasern weisen einen Durchmesser von 5 bis 20 µm, bevorzugt von 5 bis 15 µm und besonders bevorzugt von 7 bis 12 µm auf.

Vorzugsweise können auch Fasern, bevorzugt Glasfasern mit nicht-kreisförmigen Querschnitt (flache Glasfasern), insbesondere ovale, elliptische, cocoon-artige (zwei oder mehrere runde Glasfasern sind längsseitig miteinander verbunden) oder rechteckige oder nahezu rechteckige Glasfasern, in den erfindungsgemäßen Formmassen eingesetzt werden. Diese Formmassen zeigen dann Vorteile hinsichtlich der Steifheit und Festigkeit, insbesondere in Querrichtung, bei den aus den Formmassen hergestellten Formteilen. Die vorzugsweise eingesetzten flachen Glasfasern (Komponente (B)) sind Kurzglasfasern (Schnittglas) mit flacher Gestalt und einer nicht kreisförmigen Querschnittfläche, wobei das Verhältnis der senkrecht aufeinander stehenden Querschnittsachsen größer oder gleich 2 ist, und die kleinere Querschnittsachse eine Länge von ≥ 3 µm aufweist. Es wird insbesondere eine im Querschnitt möglichst rechteckige Glasfaser bevorzugt. Die Glasfasern liegen in Form von Schnittglas mit einer Länge von 2 bis 50 mm vor. Wie schon oben dargelegt wurde, werden die flachen Glasfasern innerhalb der Komponente B erfindungsgemäß als Schnittglas eingesetzt. Diese Glasfasern weisen Durchmesser der kleinen Querschnittsachse von 3 bis 20 µm und einen Durchmesser der großen Querschnittsachse von 6 bis 40 µm auf, wobei das Verhältnis der senkrecht aufeinander stehenden Querschnittsachsen (Verhältnis von Haupt- zur Nebenquerschnittsachse) zwischen 2 und 6, bevorzugt zwischen 3 und 5 und ganz besonders bevorzugt bei etwa 4 liegt.

Die Glasfasern können teilweise oder ganz durch Whisker ersetzt werden. Unter Whisker sind nadelförmige Einkristalle aus Metallen, Oxiden, Boriden, Carbiden, Nitriden, Polytitanat, Kohlenstoff usw. mit meist polygonalem Querschnitt zu verstehen, z. B. Kaliumtitanat-, Aluminiumoxyd-, Siliciumcarbid-Whiskers. Whiskers weisen im Allgemeinen einen Durchmesser von 0,1 bis 10 µm und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS Mechanismus) oder aus einem Dreiphasensystem (VLS-Mechanismus).

Teilchenförmige Füllstoffe der Komponente B sind bevorzugtermassen auf mineralischer Basis, insbesondere bevorzugt auf Basis von Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, Glasflakes, dauerhaft magnetische bzw. magnetisierbare Metallverbindungen und/oder Legierungen oder Mischungen davon ausgewählt sind. Die Füllstoffe können auch oberflächenbehandelt sein.

Die erfindungsgemässe Formmasse enthält weiterhin 8 - 18 Gew.-%, bevorzugt 10 - 16 Gew.-% und insbesondere 10 - 15 Gew.-% eines halogenfreien Flammschutzmittels oder eine Kombination aus unterschiedlichen halogenfreien Flammschutzmitteln oder ein solches Flammschutzmittel in Kombination mit einem oder mehreren Synergisten (Komponente C). Bevorzugtermassen ist die gesamte Komponente (C) halogenfrei.

Eine weitere bevorzugte Ausführungsform ist also dadurch gekennzeichnet, dass der Anteil an Komponente C im Bereich von 10-16 Gew.-%, bevorzugtermassen im Bereich von 10-15 Gew.-% liegt, und wobei vorzugsweise die Komponente C wenigstens teilweise auf Basis eines Phosphinsäuresalzes und/oder Diphosphinsäuresalzes ausgebildet ist.

Das Flammschutzmittel in der Komponente C oder die Komponente C als ganzes bildend umfasst dabei gemäß einer weiteren bevorzugten Ausführungsform 60 - 100 Gew.-%, bevorzugt 70 - 98 Gew.-%, insbesondere 80 - 96 Gew.-% eines Phosphinsäuresalzes und/oder Diphosphinsäuresalzes (Komponente C1) sowie 0 - 40 Gew.-%, bevorzugt 2 - 30 Gew.-%, insbesondere 4 - 20 Gew.-% eines stickstoffhaltigen Synergisten und/oder eines Stickstoff und Phosphor enthaltenden Flammschutzmittels (Komponente C2).

Allgemein formuliert ist diese bevorzugte Ausführungsform dadurch gekennzeichnet, dass die Komponente C folgende Komponenten umfasst, vorzugsweise aus folgenden Komponenten besteht:
C1 60 - 100 Gew.-%, bevorzugt 70 - 98 Gew.-%, insbesondere 80 - 96 Gew.-% eines Phosphinsäuresalzes und/oder Diphosphinsäuresalzes;
C2 0 - 40 Gew.-%, bevorzugt 2 - 30 Gew.-%, insbesondere 4 - 20 Gew.-% eines stickstoffhaltigen Synergisten und/oder eines Stickstoff und Phosphor enthaltenden Flammschutzmittels, bevorzugt Melamin oder Kondensationsprodukte des Melamins, wie insbesondere bevorzugt ausgewählt aus der Gruppe: Melem, Melam, Melon, Umsetzungsprodukte von Melamin mit Polyphosphorsäure, Umsetzungsprodukte von Kondensationsprodukten des Melamins mit Polyphosphorsäure oder Mischungen davon.

Bei Komponente C2 handelt es sich also bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon. Als Komponente C2 wird insbesondere Melaminpolyphosphat bevorzugt. Derartige Flammschutzmittel sind aus dem Stand der Technik bekannt. Hierzu wird auf die DE 103 46 3261 verwiesen, diesbezüglich sei der Offenbarungsgehalt dieser Schrift ausdrücklich hierin eingeschlossen.

Gemäß einer weiteren bevorzugten Ausführungsform ist die Komponente C1 ein Phosphinsäuresalz der allgemeinen Formel (I) und/oder Formel (II) und/oder deren Polymere: 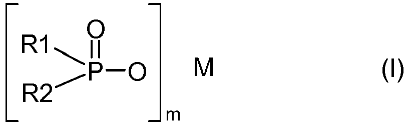 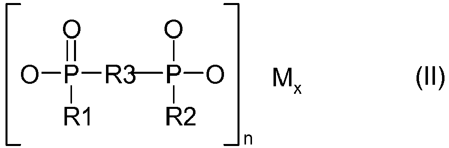 wobei
R1, R2 gleich oder verschieden sind und bevorzugt C1-C8-Alkyl, linear oder verzweigt, gesättigt, ungesättigt, oder teilweise ungesättigt und/oder Aryl sind;
R3 C1-C10-Alkylen, linear oder verzweigt, gesättigt, ungesättigt, oder teilweise ungesättigt, C6-C10-Arylen, Alkylarylen oder Arylalkylen sind;
M ein Metallion aus der 2. oder 3. Haupt- oder Nebengruppe des Periodensystems ist, bevorzugt Aluminium, Barium, Calcium und/oder Zink; und m = 2 oder 3; n = 1 oder 3; x = 1 oder 2.

Als Metallion M werden bevorzugt Aluminium, Barium, Calcium und Zink verwendet, wobei wie eingangs erwähnt im Falle von Barium als M der Anteil an Komponente D gegebenenfalls sogar unterhalb von 0.1 Gew.-% liegen kann.

Geeignete Phosphinsäuren für die Herstellung der erfindungsgemässen Phosphinsäuresalze sind beispielsweise Dimethylphosphinsäure, Ethylmethylphosphinsäure, Diethylphosphinsäure, Methyl-n-propylphosphinsäure, Methan-di(methylphosphinsäure), Ethan-1,2-di(methyl-phosphinsäure), Hexan-1,6-di(methylphosphinsäure), Benzol-1,4-di(methylphosphinsäure), Methyl-phenyl-phosphinsäure, Diphenylphosphinsäure. Die Phosphinsäuresalze können z.B. hergestellt werden, indem die Phosphinsäuren in wässriger Lösung mit Metallcarbonaten, Metallhydroxiden oder Metalloxiden umgesetzt werden, wobei im wesentlichen monomere, je nach Reaktionsbedingungen unter Umständen auch polymere Phosphinsäuresalze entstehen.

Bei den erfindungsgemässen Polyamid-Formassen bzw. bei den daraus hergestellten Formkörpern ist somit weiterhin hervorzuheben, dass in Kombination zu den vorstehend beschriebenen ausgezeichneten Eigenschaften auch ein herausragender Flammschutz erreicht wird. Die Formmasse ist nach UL-Klassifizierung V0 bei 0,4 bis 3,2 mm dicken Probenkörper (UL-94, Prüfung nach den Normen der Underwriters Laboratories (U.L.), vgl. www.ulstandards.com).

Die Formmassen können Stabilisatoren (Hitze- und Lichtstabilisatoren, Antioxidantien) Verarbeitungshilfsmittel und Schlagzähmodifikatoren sowie weitere Polymere, insbesondere aliphatische Polyamide, und weitere Additive enthalten.

Bei der Komponente E handelt es sich normalerweise generell um Additive und/ oder weitere Polymere beispielsweise ausgewählt aus der folgenden Gruppe: Schlagzähmodifikatoren, Haftvermittler, Kristallisations-Beschleuniger oder -Verzögerer, Fliesshilfsmittel, Gleitmittel, Entformungsmittel, Weichmacher, Stabilisatoren, Verarbeitungshilfsmittel, flammhemmende Zusätze, Antistatika, Pigmente, Farb- und Markierungsstoffe, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie z.B. Monosäuren oder Monoamine.

Der Anteil an Komponente E liegt gemäß einer bevorzugten Ausführungsform im Bereich von 0-4 Gew.-%, bevorzugtermassen im Bereich von 1-3 Gew.-%

Ebenfalls im Rahmen der Komponente E kann die Polyamidformmasse Stabilisatoren respektive Synergisten zur Komponente D und/oder C aufweisen.

In Kombination mit Bariumcarboxylat (D) können also gegebenenfalls und gemäß einer bevorzugten Ausführungsform zusätzlich bis 50 Gew.-%, bezogen auf die Gesamtmenge an Komponente D, an sauerstoff-, stickstoff- oder schwefelhaltigen Metallverbindungen als Stabilisatoren bzw. Synergisten (Komponente E1) zugegeben werden. Dabei bevorzugte Metalle sind Aluminium, Calcium, Magnesium, Barium, Natrium, Kalium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Bariumcarbonat, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat. Auch möglich sind Systeme wie Calciumstearat, Zinkstearat, Magnesiumstearat, Kaliumpalmitat, Magnesiumbehenat.

Bevorzugt werden Kombinationen von Bariumcarboxylat (D) mit Aluminiumtristearat, Bariumcarbonat, Dinatriumhydrogenphosphonat (Brüggolen H10), Zinkoxid, Calciumcarbonat oder Zinkcarbonat, wobei die Konzentration des Coagenzes 20 - 100 Gew-%, bevorzugt 20 - 60 Gew.-% des eingesetzten Bariumcarboxylats beträgt und die Gesamtkonzentration von Bariumcarboxylat und Coagenz die für die Komponente D angegebene Maximalkonzentration nicht überschreitet.

Besonders bevorzugt sind die nachfolgenden Kombination der Komponenten D und E1:
- Bariumstearat und Aluminiumstearat
- Bariumstearat und Calciumcarbonat
- Bariumstearat und Zinkoxid
- Bariumstearat und Dinatriumhydrogenphosphonat

Anstelle der Mischung aus Bariumcarboxylat und Bariumcarbonat kann auch ein basisches Bariumcarboxylat, bei dessen Herstellung in Bezug auf Barium weniger als die stöchiometrisch erforderliche Carbonsäuremenge eingesetzt und das überschüssige Barium in Gegenwart des Bariumcarboxylats durch Einleiten von Kohlendioxid gefällt wird.

Zudem betrifft die vorliegende Erfindung die Verwendung von Bariumcarboxylat zur Verhinderung der korrosiven Wirkung einer Polyamidformmasse mit einem halogenfreien Flammschutzmittel auf Basis einer Phosphinsäure und/oder Diphosphinsäure. Die Polyamidformmasse besteht im Rahmen einer solchen Verwendung von Bariumcarboxylat aus
(A) wenigstens 30 Gew.-%, bevorzugt 40-80 Gew.-%, wenigstens eines aliphatischen teilkristallinen Polyamids mit einer Schmelztemperatur (Tₘ) im Bereich von 240°C - 340°C, bevorzugt im Bereich von 270°C - 340°C und/oder eines teilaromatischen, teilkristallinen Polyamids mit einer Schmelztemperatur (Tₘ) im Bereich von 240°C - 340°C, wobei die Schmelztemperatur (Tₘ) jeweils nach ISO-_Norm 11357-11-2 am Granulat mit Differential Scanning Calorimetry (DSC) mit einer Aufheizrate von 20 °C/min bestimmt ist;
(B) 0 - 50 Gew.-%, bevorzugt 1-40 Gew.-%, wenigstens eines Füll- und Verstärkungsmittels;
(C) 8 - 16 Gew.-% wenigstens eines halogenfreier Flammschutzmittels auf Basis einer Phosphinsäure und/oder Diphosphinsäure;
(D) 0.1 - 2.0 Gew.-% wenigstens eines Bariumcarboxylats;
(E) 0 - 5 Gew.-% wenigstens eines Additives;
wobei die Gewichtsprozente der Komponenten (A) bis (E) zusammen 100% ergeben.Mit anderen Worten wird bei einer solchen Verwendung vorzugsweise eine Polyamidformmasse eingesetzt, wie sie oben beschrieben wurde.

Die halogenfrei flammgeschützten Polyamidformmasse wie oben beschrieben können mittels einer Spritzgussmaschine verarbeitet werden. Dabei ist bevorzugtermassen der Korrosionsverschleiss, bestimmt mittels der DKI-Plättchenmethode, 50%, bevorzugt 70% und insbesondere bevorzugt 80% gegenüber den Formmassen ohne Komponente (D) respektive ohne Bariumphosphinat im Rahmen der Komponente C reduziert.

Die oben beschriebenen Formmassen können auch zur Herstellung von thermoplastisch verarbeitbaren Formartikeln sowie aus den erfindungsgemässen Zusammensetzungen erhältlichen Formartikel verwendet werden.

Beispiele derartiger Formartikel schliessen ein: Gehäuse und Funktionsteile für Pumpen, Getriebe, Ventile und Wasserzähler, Drosselklappen, Zylinder, Kolben, Scheinwerfergehäuse, Reflektoren, Kurvenlichtverstellung, Zahnräder, Motor- und Getriebelager, Steckverbindungen, Konnektoren, Profile, Folien oder Schichten von Mehrschichtfolien, Fasern, elektronische Bauteile, insbesondere Bauteile für tragbare elektronische Geräte, Gehäuse für elektronische Bauteile, Konnektoren, Mobiltelefongehäuse, Komponenten für LED-Gehäuse, Gehäuse oder Gehäuseteile für Personalcomputer, insbesondere Notebook-Gehäuse, Werkzeuge, Verbundwerkstoffe, Fluid führende Leitungen und Behälter, insbesondere im Automobilbereich, glatte und gewellte Mono- oder Mehrschichtrohre, Rohrabschnitte, Stutzen, Fittings zum Verbinden von Schläuchen, Wellrohren und medienführenden Leitungen, Bestandteil von Mehrschichtleitungen (Innen-, Aussen- oder Zwischenschicht), einzelne Schichten bei Mehrschichtbehältern, Hydraulikleitungen, Bremsleitungen, Kupplungsleitungen, Kühlflüssigkeitsleitungen, Bremsflüssigkeitsbehälter, etc.

Die Formartikel sind durch die Verfahren Spritzguss, Extrusion oder Blasformen herstellbar.

Weitere Ausführungsformen sind in den abhängigen Ansprüchen angegeben.

### BESCHREIBUNG BEVORZUGTER AUSFÜHRUNGSFORMEN

In der Folge soll die Erfindung anhand von Ausführungsbeispielen weiter erläutert und gestützt werden. Die nun in der Folge diskutierten Ausführungsbeispiele dienen nur dem Zwecke der Erläuterung und Stützung der Erfindung, sie sollen aber nicht dazu hinzugezogen werden, die Erfindung, wie sie allgemein weiter oben beschrieben wurde, sowie in den Patentansprüchen definiert ist, einschränkend auszulegen.

In den Beispielen werden folgende Ausgangsstoffe zur Herstellung erfindungsgemässer Formmassen eingesetzt:

### Komponente (A)

| | |
|---|---|
| Polymer-1: | Polyamid 6T/66 mit einem molaren Verhältnis von Terephthalsäure zu Adipinsäure von 55:45 und einem Schmelzpunkt von 310°C. |
| Polymer 2: | Polyamid 6T/10T mit einem Schmelzpunkt von 295°C. |
| Polymer 3: | Polyamid 6T/6I mit einem Schmelzpunkt von 325°C. |

### Komponente (B)

| | |
|---|---|
| Glasfaser-1 | Standard-Glasfaser (rund) für Polyamide, Faserlänge 4.5 mm, Durchmesser 10 µm. |
| Glasfaser-2 | flache Glasfaser von Nittobo (JP), Hauptquerschnittsachsen sind ca. 7 und 28 µm, das Verhältnis der Querschnittsachsen demnach ca. 4. |

### Komponente (C)

Exolit OP1230 (Aluminium-tris-diethylphophinat, Clariant, CH)
Melapur 200/70 (Melaminpolyphosphat, Ciba, CH)

### Komponente (D)

LIGA Bariumstearat (Peter GREVEN, DE)
LIGA Barium(12-hydroxystearat) (Peter GREVEN, DE)
LIGA Bariumlaurat (Peter GREVEN, DE)
Barium(2-ethyl)hexanoat (Sigma Aldrich)

### Vergleichssystem für Komponente (D)

Bariumcarbonat Typ B (Solvay CPC Barium & Strontium GmbH)

### Komponente (E)

Calciumstearat (Peter GREVEN, DE)
Zinkstearat (Peter GREVEN, DE)
Zinkoxid (Brüggemann, DE)
Firebrake 500 Fine (Zinkborat, Borax, USA)
Actilox 400 SM (Boehmit, Nabaltec AG, DE)
Alugel 34-TH (Aluminiumtristearat, Bärlocher GmbH, DE)
Brüggolen H10 (Dinatriumhydrogenphophonat, Brüggemann, DE)
Irganox 1098 (Ciba Specialities)

### Herstellung der Formmassen und deren Verarbeitung

Die Ausgangsstoffe wurden in den in den Tabellen 1-4 aufgeführten Mengen, die jeweils in Gew.% angegeben sind, mittels eines ZSK25 Zweischnecken-Extruders von Werner&Pfleiderer zu den entsprechenden Formmassen compoundiert. Die Komponenten A, C2, D1, D2 und E wurden vorgemischt und so wie Komponente C1 über Dosierwaagen in die Einzugszone des Extruder gefördert. Die Glasfasern (Komponente B) wurden über einen Side-Feeder zugeführt. Die Homogenisierung der Komponenten erfolgte bei Temperaturen von 300-340°C. Die Formmassen wurden als Strang ausgetragen, in einem Wasserbad gekühlt und anschliessend granuliert. Das Granulat wurde auf einen Feuchtegehalt von < 0.05% getrocknet und auf einer Spritzgussmaschine (Zylindertemperatur: 330°C, Formtemperatur: 130°C) zu Prüfkörpern verarbeitet.

Folgende Prüfungen wurden nach folgenden Normen und an folgenden Prüfkörpern durchgeführt.

### Messung der Korrosionswirkung

Der an den Verarbeitungsmaschinen (Extruder, Spritzgussmaschine) auftretende Verschleiss bei der thermoplastischen Verarbeitung von halogenfreien flammgeschützten Formmassen nach dem Stand der Technik wird wesentlich durch Korrosionseffekte, ausgelöst durch das Flammschutzmittel, bestimmt. Dieser Verschleiss lässt sich mittels einer sogenannten Verschleißdüse, die auf dem Prinzip der DKI-Plättchenmethode (G. Menning, M. Lake, Verschleissminimierung in der Kunststoffverarbeitung, 294ff, Carl Hanser Verlag, München 2008) basiert, quantifizieren. Die Verschleissdüse ist einer Spritzgussmaschine nachgeschaltet und weisst einen rechteckigen Spalt von 12 mm Länge, 10 mm Breite und 0.4 mm Höhe auf. Dieser Spalt wird von zwei plättchenförmigen Probekörpern gebildet. Durch Differenzwägungen der Probekörper vor und nach dem Test und gegebenenfalls zusätzlichen optischen Untersuchungen lassen sich Verschleiss- und Korrosionseinflüsse der Polymerschmelze eindeutig und reproduzierbar untersuchen. Wegen der rheologisch eindeutigen Situation - Druckströmung zwischen zwei parallelen Platten - und Tests mit verschiedenen Stahlsorten können die Verschleissmessungen auch direkt in die Praxis übertragen werden.

Für den Korrosionsverschleisstest wurden Probekörper der Dimension 15x12x5 mm gefertigt mit der Stahlqualität 1.2379 verwendet. Der Korrosionsverschleisstest wurde auf einer Netstal Spritzgiessanlage, ausgerüstet mit einer Elion 1750 Schliesseinheit und Force 840 Spritzgiesseinheit, durchgeführt.

Pro Test wurden 25 kg einer Formmasse durch die Verschleissdüse gefahren, wobei die Düsen- und damit auch die Probekörpertemperatur abhängig vom verwendeten Polymertyp eingestellt wurde. Für die Beispiele und Vergleichsbeispiele auf Basis von Polymer 1 und 3 wurde eine Düsentemperatur von 340°C, auf Basis von Polymer 2 eine Düsentemperatur von 315°C gewählt. Weitere Maschinenparameter waren:

| | |
|---|---|
| Schneckendrehzahl: | 100 U/min |
| Staudruck: | 30 bar |
| Dosierweg: | 50 ccm |
| Einspritzgeschwindigkeit: | 8.1 ccm/s |

**Zylindertemperaturen:**

| | |
|---|---|
| für Polymer 1 und 3: | 340/310/300/300/300/295/80°C |
| für Polymer 2: | 315/300/295/295/295/290/80°C |

Die Probekörper wurden vor und nach dem Test auf einer Analysenwaage auf 0.5 mg genau ausgewogen. Der Verschleiss errechnet sich aus der Differenz dieser Auswagen von je zwei im Test verwendeten Metallplättchen und wird in den Tabellen als Absolutmenge in der Einheit Milligramm aufgeführt.

### Zug-E-Modul, Reissfestigkeit und Reissdehnung:

ISO 527 mit einer Zuggeschwindigkeit von 50 mm/min (unverstärkte Varianten) oder einer Zuggeschwindigkeit von 5 mm/min (verstärkte Varianten)
ISO-Zugstab, Norm: ISO/CD 3167, Typ A1, 170 x 20/10 x 4 mm, Temperatur 23 °C

### Thermisches Verhalten: Schmelzpunkt, Schmelzenthalpie und Glasumwandlungstemperatur (Tg):

ISO-_Norm 11357-11-2; Granulat; Die Differential Scanning Calorimetry (DSC) wurde mit Aufheizrate von 20 °C/min durchgeführt. Für die Glasumwandlungstemperatur (Tg) wird die Temperatur für den Onset angegeben.

### Relative Viskosität:

DIN EN ISO 307, in 0,5 Gew.-%-iger m-Kresollösung, Temperatur 20 °C Granulat

### Brandtest :

Der Brandtest erfolgte nach UL-94 ("Tests for Flammability of Plastic Materials for Parts in Devices and Applications" der Underwriters Laboratories) an Prüfkörpern der Dimension 127 x 12.7 x 0.8 mm mit üblicher Konditionierung.

### Lötbeständigkeit (Blasenbildung im Reflow-Lötprozess (Blistering)

Die Probekörper der Dimension 127 x 12.7 x 0.8 (1.6 und 3.2) mm wurden nach Konditionierung, d.h. 168h Lagerung bei 85°C und einer relativen Feuchte von 85 %, (Joint Industry Standard: IPC/JEDEC J-STD-020C, Moisture Sensitive Level 1, July 2004) einem Reflow-Lötprozess unterworfen. Hierzu durchliefen die Probekörper in einem Vollkonvektions-Reflow-Lötofen ESSEMTEC 300 FC ein Temperatur/Zeit-Profil entsprechend der Norm IPC/JEDEC J-STD-020C, d.h. die Temperaturen für die 3 Heizzonen betrugen 155/235/285°C und die Geschwindigkeit 200 mm/min. Zusätzlich wurde ein noch höheres Temperaturprofil 155/235/295°C gefahren, wobei die Geschwindigkeit mit der die Probekörper durch den Lötofen gezogen wurden, wiederum 200 mm/min betrug.
Blasenbildung: + keine Blasen, o einzelne kleine Blasen, - deutliche Blasenbildung

### Diskussion der Resultate:

Die verschiedenen Vergleichsbeispiele 1-14 sowie die Beispiele nach der Erfindung 1-22 sind in den Tabellen 1-4 zusammengefasst zusammen mit den an den Proben gemessenen Endeigenschaften.

In Tab. 1 sind Resultate im Zusammenhang mit runden Glasfasern (Glasfaser 1) bei Verwendung von Polyamid 6T/66 (Polymer 1) in Kombination mit Bariumstearat als Komponente D angegeben. Die überragenden Werte beim Korrosionstest für die Beispiele zeigen die hervorragenden Eigenschaften der vorgeschlagenen Polyamidformmasse. Auch kann, wie in allen anderen Beispielen, gesehen werden, wie die Reißfestigkeit auf einem sehr guten Wert gehalten werden kann und dass der Brandtest mit Klassifikation V0 stets erreicht wird. Zudem ist erkennbar, beim Vergleich der Beispiele 1-5 zum Beispiel mit dem Vergleichsbeispiel 2 oder 3, dass die besondere Wirkung der Komponente D nicht mit dem Stearat allein zusammenhängen kann, und beim Vergleich der Beispiele 1-5 mit dem Vergleichsbeispiel 5, dass die besondere Wirkung auch nicht mit dem Barium-Kation allein zusammenhängen kann. Tatsächlich sind anorganische Bariumverbindungen wie beispielsweise Bariumcarbonat nicht im Sinne der Erfindung wirksam. Sie sind höchstens als Synergist in Kombination mit einem Bariumcarboxylat gemäß Komponente D in einem gewissen Umfang wirksam, wie dies beispielsweise aus dem Beispiel 3 erkannt werden kann.

In Tab. 2 sind Resultate im Zusammenhang mit runden Glasfasern (Glasfaser 1) bei Verwendung von Polyamid 6T/10T in Kombination mit unterschiedlichen Bariumcarboxylaten angegeben. Aus den in dieser Tabelle zusammengestellten Resultaten ist wiederum der hervorragende Korrosionstest erkennbar, es ist aber auch erkennbar, dass für die unterschiedlichen Carboxylate von Barium hervorragende Resultate erhalten werden. Auch hier wird aus dem Vergleich mit den Vergleichsbeispielen 10 respektive 11 erkennbar, dass weder das Barium Kation allein (Vergleichsbeispiel 10) noch das Stearat allein (Vergleichsbeispiel 11) für die hervorragende Wirkung verantwortlich gemacht werden können. Im Hinblick auf die ungenügende Wirkung der Stearate von Magnesium, Calcium und Zink sowie der Oxide und Carbonate von Zink und Barium ist es umso überraschender, dass die Bariumcarboxylate die Korrosion derart stark reduzieren ohne das Brandverhalten und die mechanischen Eigenschaften negativ zu beeinflussen.

In Tab. 3 sind Resultate im Zusammenhang mit runden Glasfasern (Glasfaser 1) aber auch mit flachen Glasfasern (Glasfaser 2) bei Verwendung von Polyamid 6T/6I zusammengestellt, auch hier wiederum mit eindrücklich hervorragenden Werten für die Korrosion.

In Tab. 4 sind weitere Resultate im Zusammenhang mit runden Glasfasern und bei Verwendung von Polyamid 6T/10T zusammengestellt, hier zusammen mit Messungen zu Lötbeständigkeit. Auch hier wird der hervorragende Korrosionstest dokumentiert und gleichzeitig auch eine durchwegs hervorragende Lötbeständigkeit.

**Tabelle 1 Vergleichsbeispiele 1-5 (VB1 - VB5) und Beispiele 1-5 und 22 nach der Erfindung (B1 - B5, B22).**

| **Beispiel** | **Einheit** | **VB1** | **VB2** | **VB3** | **VB4** | **VB5** | **B1** | **B2** | **B3** | **B4** | **B5** | **B22** |
|---|---|---|---|---|---|---|---|---|---|---|---|---|
| ***Zusammensetzung*** | | | | | | | | | | | | |
| Polymer-1 | Gew.-% | 57.25 | 56.75 | 55.40 | 55.40 | 57.25 | 57.25 | 56.95 | 56.95 | 56.75 | 56.95 | 56.95 |
| Glasfaser 1 | Gew.-% | 30.00 | 30.00 | 30.0 | 30.00 | 30.00 | 30.00 | 30.00 | 30.00 | 30.00 | 30.00 | 30.00 |
| Exolit OP1230 | Gew.-% | 12.00 | 12.00 | 14.0 | 12.00 | 12.00 | 12.00 | 12.00 | 12.00 | 12.00 | 12.00 | 12.00 |
| Melapur 200/70 | Gew.-% | | | | | | | | | | | |
| Firebrake 500 Fine | Gew.-% | | | | 0.35 | | | | | | | |
| Actilox 400 SM | Gew.-% | | | | 2.00 | | | | | | | |
| Calciumstearat | Gew.-% | | | 0.35 | | | | | | | | |
| Zinkstearat | Gew.-% | | 1.00 | | | | | | | | | |
| Bariumcarbonat | Gew.-% | | | | | 0.50 | | | 0.30 | | | |
| Bariumstearat | Gew.-% | | | | | | 0.50 | 0.80 | 0.50 | 0.50 | 0.50 | |
| Barium(12-hydroxystearat) | Gew.-% | | | | | | | | | | | 0.50 |
| Alugel 34-TH | Gew.-% | 0.50 | | | | | | | | 0.50 | | |
| Brüggolen H1 | Gew.-% | | | | | | | | | | 0.30 | |
| Irganox 1098 | Gew.-% | 0.25 | 0.25 | 0.25 | 0.25 | 0.25 | 0.25 | 0.25 | 0.25 | 0.25 | 0.25 | 0.25 |

| ***Eigenschaften*** | | | | | | | | | | | | |
|---|---|---|---|---|---|---|---|---|---|---|---|---|
| Zug-E-Modul | MPa | 11200 | 10900 | 12200 | 11400 | 11200 | 11000 | 11000 | 11100 | 11200 | 11000 | 11000 |
| Reissfestigkeit | MPa | 150 | 119 | 120 | 122 | 145 | 148 | 145 | 150 | 152 | 155 | 155 |
| Zugdehnung | % | 2.2 | 1.6 | 1.7 | 1.6 | 2.1 | 2.2 | 2.2 | 2.3 | 2.3 | 2.4 | 2.4 |
| Brandtest UL-94 | - | V0 | V0 | V0 | V0 | V1 | V0 | V0 | V0 | V0 | V0 | V0 |
| Korrosionstest | mg | 65 | 52 | 78 | 48 | 34 | 8 | 0 | 5 | 7 | 5 | 10 |

**Tabelle 2 Vergleichsbeispiele 6-11 (VB6 - VB11) und Beispiele 6-10 nach der Erfindung (B6 - 10).**

| **Beispiel** | **Einheit** | **VB6** | **VB7** | **VB8** | **VB9** | **VB10** | **VB11** | **B6** | **B7** | **B8** | **B9** | **B10** |
|---|---|---|---|---|---|---|---|---|---|---|---|---|
| ***Zusammensetzung*** | | | | | | | | | | | | |
| Polymer-2 | Gew.-% | 56.70 | 54.65 | 56.65 | 56.50 | 56.50 | 56.50 | 56.50 | 56.20 | 55.90 | 56.50 | 56.50 |
| Glasfaser 1 | Gew.-% | 30.00 | 30.00 | 30.00 | 30.00 | 30.00 | 30.00 | 30.00 | 30.00 | 30.00 | 30.00 | 30.00 |
| Exolit OP1230 | Gew.-% | 12.00 | 12.00 | 12.00 | 12.00 | 12.00 | 12.00 | 12.00 | 12.00 | 12.00 | 12.00 | 12.00 |
| Melapur 200/70 | Gew.-% | 0.50 | 0.50 | 0.50 | 0.50 | 0.50 | 0.50 | 0.50 | 0.50 | 0.50 | 0.50 | 0.50 |
| Firebrake 500 Fine | Gew.-% | | 0.35 | 0.35 | | | | | | | | |
| Actilox 400 SM | Gew.-% | | 2.00 | | | | | | | | | |
| Zinkoxid | Gew.-% | | | | 0.50 | | | | | | | |
| Bariumcarbonat | Gew.-% | | | | | 0.50 | | | | 0.30 | | |
| Zinkstearat | Gew.-% | | | | | | 0.50 | | | | | |
| Bariumstearat | Gew.-% | | | | | | | 0.50 | 0.80 | 0.50 | | |
| Bariumlaureat | Gew.-% | | | | | | | | | | 0.50 | |
| Barium(2-ethyl)hexanoat | Gew.-% | | | | | | | | | | | 0.50 |
| Irganox 1098 | Gew.-% | 0.50 | 0.50 | 0.50 | 0.50 | 0.50 | 0.50 | 0.50 | 0.50 | 0.50 | 0.50 | 0.50 |
| Alugel 34-TH | Gew.-% | 0.30 | | | | | | | | 0.30 | | |

| ***Eigenschaften*** | | | | | | | | | | | | |
|---|---|---|---|---|---|---|---|---|---|---|---|---|
| Zug-E-Modul | MPa | 10400 | 10700 | 10300 | 10200 | 10900 | 10300 | 10300 | 10300 | 10300 | 10300 | 10300 |
| Reissfestigkeit | MPa | 152 | 134 | 129 | 131 | 157 | 135 | 151 | 151 | 147 | 152 | 153 |
| Zugdehnung | % | 2.5 | 2.0 | 1.9 | 1.9 | 2.7 | 2.0 | 2.3 | 2.3 | 2.3 | 2.4 | 2.5 |
| Brandtest UL-94 | - | V0 | V0 | V0 | V0 | V1 | V0 | V0 | V0 | V0 | V0 | V0 |
| Korrosionstest | mg | 70 | 50 | 58 | 45 | 40 | 42 | 12 | 10 | 10 | 5 | 0 |

**Tabelle 3 Vergleichsbeispiel 12 (VB12) und Beispiele 11-15 nach der Erfindung (B11 - B15).**

| **Beispiel** | **Einheit** | **VB12** | **B11** | **B12** | **B13** | **B14** | **B15** |
|---|---|---|---|---|---|---|---|
| ***Zusammensetzung*** | | | | | | | |
| Polymer-1 | Gew.-% | | | | 57.25 | | |
| Polymer-2 | Gew.-% | | | | | 56.50 | |
| Polymer-3 | Gew.-% | 57.20 | 57.00 | 56.70 | | | 56.50 |
| Glasfaser 1 | Gew.-% | 30.00 | 30.00 | 30.00 | | | |
| Glasfaser 2 | Gew.-% | | | | 30.00 | 30.00 | 30.00 |
| Exolit OP1230 | Gew.-% | 12.00 | 12.00 | 12.00 | 12.00 | 12.00 | 12.00 |
| Melapur 200/70 | Gew.-% | | | | | 0.50 | 0.50 |
| Bariumstearat | Gew.-% | | 0.50 | 0.50 | 0.50 | 0.50 | 0.50 |
| Alugel 34-TH | Gew.-% | 0.30 | | 0.30 | | | |
| Brüggolen H1 | Gew.-% | | | | | | |
| Irganox 1098 | Gew.-% | 0.50 | 0.50 | 0.50 | 0.25 | 0.50 | 0.50 |

| ***Eigenschaften*** | | | | | | | |
|---|---|---|---|---|---|---|---|
| Zug-E-Modul | MPa | 11200 | 11200 | 11300 | 11400 | 10500 | 11300 |
| Reissfestigkeit | MPa | 170 | 168 | 165 | 150 | 155 | 171 |
| Zugdehnung | % | 2.3 | 2.3 | 2.3 | 2.3 | 2.4 | 2.2 |
| Brandtest UL-94 | - | V0 | V0 | V0 | V0 | V0 | V0 |
| Korrosionstest | mg | 65 | 12 | 15 | 6 | 10 | 5 |

**Tabelle 4 Vergleichsbeispiele 13-14 (VB13 - VB14) und Beispiele 16-21 nach der Erfindung (B16 - B21).**

| **Beispiel** | **Einheit** | **VB13** | **VB14** | **B16** | **B17** | **B18** | **B19** | **B20** | **B21** |
|---|---|---|---|---|---|---|---|---|---|
| ***Zusammensetzung*** | | | | | | | | | |
| Polymer-2 | Gew.-% | 56.70 | 56.20 | 56.11 | 56.43 | 56.14 | 56.41 | 56.45 | 56.45 |
| Glasfaser 1 | Gew.-% | 30.00 | 30.00 | 30.00 | 30.00 | 30.00 | 30.00 | 30.00 | 30.00 |
| Exolit OP1230 | Gew.-% | 12.00 | 12.00 | 12.00 | 12.00 | 12.00 | 12.00 | 12.00 | 12.00 |
| Melapur 200/70 | Gew.-% | 0.50 | 0.50 | 0.50 | 0.50 | 0.50 | 0.50 | 0.50 | 0.50 |
| Zinkcarbonat | Gew.-% | | 0.50 | | | | | | |
| Zinkoxid | Gew.-% | | | 0.15 | 0.15 | 0.15 | 0.02 | | 0.15 |
| Bariumcarbonat | Gew.-% | | | | | | | 0.15 | |
| Bariumstearat | Gew.-% | | | 0.57 | 0.40 | 0.40 | 0.40 | 0.23 | 0.23 |
| Alugel 34-TH | Gew.-% | 0.30 | 0.30 | 0.17 | 0.02 | 0.31 | 0.17 | 0.17 | 0.17 |
| Irganox 1098 | Gew.-% | 0.50 | 0.50 | 0.50 | 0.50 | 0.50 | 0.50 | 0.50 | 0.50 |

| ***Eigenschaften*** | | | | | | | | | |
|---|---|---|---|---|---|---|---|---|---|
| Zug-E-Modul | MPa | 10700 | 10100 | 10400 | 10400 | 10300 | 10800 | 10800 | 10200 |
| Reissfestigkeit | MPa | 153 | 107 | 136 | 144 | 136 | 150 | 159 | 146 |
| Zugdehnung | % | 2.7 | 1.5 | 2.0 | 2.1 | 2.0 | 2.3 | 2.7 | 2.2 |
| Brandtest UL-94 | - | V0 | V0 | V0 | V0 | V0 | V0 | V0 | V0 |
| Korrosionstest | mg | 62 | 44 | 5 | 10 | 8 | 12 | 10 | 15 |
| Lötbeständigkeit 1.6 mm 155°C/235°C/285°C | | + | + | + | + | + | + | + | + |
| Lötbeständigkeit 3.2 mm 155°C/235°C/285°C | | o | o | + | + | + | + | + | + |
| Lötbeständigkeit 1.6 mm 155°C/235°C/295°C | | - | - | + | + | + | + | + | + |
| Lötbeständigkeit 3.2 mm 155°C/235°C/295°C | | o | o | + | o | + | + | + | + |

## Patentansprüche

1. Polyamidformmasse auf Basis von teilkristallinen Polyamiden, bestehend aus
(A) wenigstens 30 Gew.-% wenigstens eines aliphatischen teilkristallinen Polyamids mit einer Schmelztemperatur (Tₘ) im Bereich von 240°C - 340°C und/oder eines teilaromatischen, teilkristallinen Polyamids mit einer Schmelztemperatur (Tₘ) im Bereich von 240°C - 340°C, wobei die Schmelztemperatur (Tₘ) jeweils nach ISO-_Norm 11357-11-2 am Granulat mit Differential Scanning Calorimetry (DSC) mit einer Aufheizrate von 20 °C/min bestimmt ist;
(B) 0 - 50 Gew.-% wenigstens eines Füll- und Verstärkungsmittels;
(C) 8 - 16 Gew.-% wenigstens eines halogenfreien Flammschutzmittels;
(D) 0.1 - 2.0 Gew.-% wenigstens eines Bariumcarboxylats;
(E) 0 - 5 Gew.-% wenigstens eines Additives;
wobei die Gewichtsprozente der Komponenten (A) bis (E) zusammen 100% ergeben.

2. Polyamidformmasse nach Anspruch 1, **dadurch gekennzeichnet, dass** die Komponente A durch 40-80 Gew.-%, wenigstens eines teilaromatischen, teilkristallinen Polyamids mit einer Schmelztemperatur (Tₘ) im Bereich von 240°C - 340°C oder im Bereich von 270°C - 340°C gebildet wird.

3. Polyamidformmasse nach Anspruch 1 oder 2, **dadurch gekennzeichnet, dass** der Anteil der Komponente (D) im Bereich von 0.2-1.5 Gew.-% liegt, oder im Bereich von 0.3 bis 1.0 Gew.-%.

4. Polyamidformmasse nach Anspruch 3, **dadurch gekennzeichnet, dass** das Bariumcarboxylat der Komponente (D) die allgemeine Formel
Ba(CO₂-R₁)₂
aufweist, wobei R₁ ausgewählt ist aus der Gruppe: H, Alkyl, Aryl, Cycloalkyl, mit 1-36 Kohlenstoffatomen, wobei R₁ auf Basis von Ameisen-, Essig-, Propion-, Butter-, Valerian-, Capron-, Önanth-, Capryl-, Pelargon-, Caprin-, Laurin-, Myristin-, Palmitin-, Margarin-, Stearin-, 12-Hydroxystearin-, Öl-, Arachin-, Behen-, Eruca-, Lignocerin-, Cerotin-, Montan-, Melissinsäure, 2-Ethylhexylcarbonsäure, Ricinoleinsäure oder einer Mischung davon ausgewählt sein kann,
oder dass das Bariumcarboxylat der Komponente (D) die allgemeine Formel
Ba((CO₂)₂-R)
aufweist, wobei R ausgewählt ist aus der Gruppe: Alkyl, Aryl, Cycloalkyl, mit 1-36 Kohlenstoffatomen, wobei R auf Basis von Oxalsäure, Malonsäure, Maleinsäure, Bernsteinsäure, Äpfelsäure, Weinsäure, Glutarsäure, Adipinsäure, Azelainsäure, Sebazinsäure, Undecan-, Dodecan-, Tridecan-, Tetradecan-, Pentadecan-, Hexandecan-, Heptadecan-, Octadecan-, Nonadecan- und Eicosandisäure, C36-Dimerfettsäure, oder einer Mischung davon ausgewählt sein kann.

5. Polyamidformmasse nach einem der Ansprüche 2 oder 3, **dadurch gekennzeichnet, dass** das Bariumcarboxylat auf Basis einer linearen, gesättigten, substituierten oder unsubstituierten, Fettsäure mit 12, 14, 16, 18 oder 20 Kohlenstoffatomen oder auf Basis einer Mischung solcher Fettsäuren beruht, wobei das Bariumcarboxylat ausgewählt sein kann aus der Gruppe: Bariumlaurat, Bariumpalmitat, Bariumstearat, Barium(12-hydroxystearat).

6. Polyamidformmasse nach einem der vorhergehenden Ansprüche, **dadurch gekennzeichnet, dass** das wenigstens eine teilkristalline Polyamid der Komponente A eine Schmelztemperatur im Bereich von 270°C - 340°C, oder im Bereich von 280°C - 330°C aufweist.

7. Polyamidformmasse nach einem der vorhergehenden Ansprüche, **dadurch gekennzeichnet, dass** das teilaromatische, teilkristalline Polyamid der Komponente A, wenn die Komponente A durch ein teilaromatisches, teilkristallines Polyamid gebildet ist, aufgebaut ist aus:
(A1) 25 - 100 Mol-% Terephthalsäure, bezogen auf den Gesamtgehalt an anwesenden Säuren,
0 - 75 Mol-%, bezogen auf den Gesamtgehalt an anwesenden Säuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 25 - 100 Mol-%, bezogen auf den Gesamtgehalt an anwesenden Diaminen, wenigstens eines aliphatischen Diamins mit 4 bis 36 Kohlenstoffatomen,
0- 75 Mol-%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin,
wobei der prozentuale Molgehalt an Dicarbonsäuren 100% und der prozentuale Molgehalt an Diaminen 100% ausmacht,
sowie aus:
(A3) 0 - 100 Mol-% Aminocarbonsäuren und/oder Lactame mit 6 bis 12 Kohlenstoffatomen
mit der Maßgabe, dass die Konzentration von (A3) höchstens 40 Gew.-%, oder höchstens 30 Gew.-%, oder höchstens 20 Gew.-% bezogen auf die Summe von (A1) bis (A3) ausmacht.

8. Polyamidformmasse nach Anspruch 7, **dadurch gekennzeichnet, dass** die von Terephthalsäure verschiedene Dicarbonsäure der Komponente A1 ausgewählt ist aus der Gruppe: Naphthalindicarbonsäure, Isophthalsäure Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimersäure, cis- und/oder trans-Cyclohexan-1,4-dicarbonsäure, cis- und/oder trans-Cyolohexan-1,3-dicarbonsäure respektive Mischungen davon,
und/oder dass das aliphatische Diamin der Komponente A2 ausgewählt ist aus der Gruppe: 1,4-Butandiamin, 1,5-Pentandiamin, 1,6-Hexandiamin, 2-Methyl-1,5-pentandiamin, 1,7-Heptandiamin, 1,8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin oder eine Mischung davon,
und/oder dass das cycloaliphatische respektive araliphatische Diamin der Komponente A2 ausgewählt ist aus der Gruppe: Cyclohexandiamin, 1,3-Bis-(Aminomethyl)-cyclohexan, Isophorondiamin, Norbornandimethylamin, 4,4'-Diaminodicyclohexylmethan, 2,2-(4,4'-Diaminodicyclohexyl)propan und 3,3'-Dimethyl-4,4'-diaminodicyclohexylmethan, m-Xylylendiamin und p-Xylylendiamin, respektive Mischungen davon,
und/oder dass die Komponente A3 ausgewählt ist aus der Gruppe: Caprolactam, α,ω-Aminocapronsäure, α,ω-Aminononansäure, α,ω-Aminoundecansäure, Laurinlactam α,ω-Amino¬dodecansäure, α,ω-Aminosäuren mit 4, 6, 7, 8, 11 oder 12 C-Atomen, insbesondere Pyrrolidin-2-on, ε-Caprolactam, Önanthlactam, Capryllactam, Laurinlactam, 1,4-Aminobutansäure, 1,6-Aminohexansäure, 1,7-Aminoheptansäure, 1,8-Aminooctansäure, 1,11-Aminoundecansäure und 1,12-Aminododecansäure respektive Mischungen davon.

9. Polyamidformmasse nach einem der Ansprüche 7 oder 8, **dadurch gekennzeichnet, dass** der Anteil an Terephthalsäure in der Komponente A1 wenigstens 50 Mol-% ausmacht, oder wenigstens 52 Mol-%, oder wenigstens 54 Mol-%, uoder wenigstens 62 Mol-%, wobei die Komponente A2 ausschließlich aus Hexamethylendiamin bestehen kann oder ausschließlich aus 2-Methyl-1,5-Pentandiamin oder ausschließlich aus einer Mischung aus Hexamethylendiamin und 2-Methyl-1,5-Pentandiamin.

10. Polyamidformmasse nach einem der Ansprüche 7-9, **dadurch gekennzeichnet, dass** der Anteil an Terephthalsäure in der Komponente A1 wenigstens 50 Mol-% ausmacht, und dass innerhalb der Komponente A2 das aliphatische Diamin Hexamethylendiamin in einem Anteil von wenigstens 10 Mol-%, oder wenigstens 50 Mol-%, umfasst, und dass der verbleibende Anteil an Diamin ausgewählt ist aus der Gruppe: Nonandiamin, Methyloctandiamin, Decandiamin Dodecandiamin, Trimethylhexamethylendiamin, m-Xylylendiamin, Bis-(4-aminocyclohexyl)-methan, Bis-(4-amino-3-methyl-cyclohexyl)-methan, oder eine Mischung davon, wobei vorzugsweise aus dieser Gruppe nur ein System in einer Mischung mit Hexamethylendiamin eingesetzt wird,
dass der Anteil an Terephthalsäure in der Komponente A1 wenigstens 50 Mol-% ausmacht, und dass die Komponente A2 eine Mischung aus Hexamethylendiamin und Decandiamin ist, wobei mindestens 10 Mol-%, oder mindestens 15 Mol-%, oder mindestens 50 Mol-%, Hexamethylendiamin, bezogen auf den Gesamtdiamingehalt, eingesetzt wird;
dass der Anteil an Terephthalsäure in der Komponente A1 wenigstens 80 Mol-%, oder 100 Mol-%, ausmacht, und dass die Komponente A2 aus 10 - 60 Mol-% Hexamethylendiamin und 40 - 90 Mol-% Decandiamin besteht.

11. Polyamidformmasse nach einem der vorhergehenden Ansprüche 7-10, **dadurch gekennzeichnet, dass** die Komponente A ausgewählt ist aus der folgenden Gruppe:
Polyamid 6T/6I mit 50 bis 80 Mol-% Hexamethylenterephthalamid-Einheiten und 20 bis 50 Mol-% Hexamethylenisophthalamid-Einheiten, oder mit 55 bis 75 Mol-% Hexamethylenterephthalamid-Einheiten und 25 bis 45 Mol-% Hexamethylenisophthalamid-Einheiten, oder mit 62 bis 73 Mol-% Hexamethylenterephthalamid-Einheiten und 25 bis 38 Mol-% Hexamethylenisophthalamid-Einheiten;
Polyamid 6T/66 mit 50 bis 80 Mol-% Hexamethylenterephthalamid-Einheiten und 20 bis 50 Mol-% Hexamethylenadipamid-Einheiten, oder mit 50 bis 65 Mol-% Hexamethylenterephthalamid-Einheiten und 35 bis 50 Mol-% Hexamethylenadipamid-Einheiten oder mit 52 bis 62 Mol-% Hexamethylenterephthalamid-Einheiten und 38 bis 48 Mol-% Hexamethylenadipamid;
ternäres Polyamid, wobei das ternäre Polyamid aus der folgenden Gruppe ausgewählt sein kann: 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten;
Polyamid 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH₂)ₙ₋₁-CO-, wobei n = 6, 11 oder 12 ist;
Polyamid 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel -NH-(CH₂)ₙ₋₁-CO-, wobei n gleich 6, 11 oder 12 ist;
Polyamid 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel -NH-(CH₂)ₙ₋₁-CO-, wobei n gleich 6, 11 oder 12 ist;
Polyamid 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH₂)ₙ₋₁-CO-, wobei n gleich 6, 11 oder 12 ist.

12. Polyamidformmasse nach einem der vorhergehenden Ansprüche, **dadurch gekennzeichnet, dass** der Anteil an Komponente B im Bereich von 1 bis 40 Gew.-% liegt, oder im Bereich von 10-40 Gew.-%, oder im Bereich von 20-40 Gew.-%, wobei es sich um faser- oder teilchenförmige Füllstoffe oder deren Mischungen handeln kann, und wobei faserförmige Füllstoffe ausgewählt sein können aus der Gruppe Glasfasern, Kohlenstofffasern, Aramidfasern, Kaliumtitanatwhisker wobei diese Füllstoffe in Form endloser Stränge oder in geschnittener Form als Kurzglasfasern, vorliegen und wobei sie mit einer Schlichte und/oder einem Haftvermittler ausgerüstet sein können, wobei Glasfasern aus E-Glas und/oder solche mit kreisförmigem Querschnitt und/oder mit nicht-kreisförmigen Querschnitt eingesetzt werden können,
und wobei teilchenförmige Füllstoffe auf mineralischer Basis von Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Bariumsulfat, Voll- oder Hohl-Glaskugeln oder gemahlenem Glas, Glasflakes, dauerhaft magnetische bzw. magnetisierbare Metallverbindungen und/oder Legierungen oder Mischungen davon ausgewählt sein können.

13. Polyamidformmasse nach einem der vorhergehenden Ansprüche, **dadurch gekennzeichnet, dass** der Anteil an Komponente C im Bereich von 10-16 Gew.-%, oder im Bereich von 10-15 Gew.-% liegt, und wobei die Komponente C wenigstens teilweise auf Basis eines Phosphinsäuresalzes und/oder Diphosphinsäuresalzes ausgebildet sein kann.

14. Polyamidformmasse nach einem der vorhergehenden Ansprüche, **dadurch gekennzeichnet, dass** die Komponente C umfasst:
C1 60 - 100 Gew.-%, oder 70 - 98 Gew.-%, oder 80 - 96 Gew.-% eines Phosphinsäuresalzes und/oder Diphosphinsäuresalzes;
C2 0 - 40 Gew.-%, oder 2 - 30 Gew.-%, oder 4 - 20 Gew.-% eines stickstoffhaltigen Synergisten und/oder eines Stickstoff und Phosphor enthaltenden Flammschutzmittels ausgewählt als Melamin oder Kondensationsprodukte des Melamins, wobei diese Flammschutzmittel ausgewählt sein können aus der Gruppe: Melem, Melam, Melon, Umsetzungsprodukte von Melamin mit Polyphosphorsäure, Umsetzungsprodukte von Kondensationsprodukten des Melamins mit Polyphosphorsäure oder Mischungen davon.

15. Polyamidformmasse nach Anspruch 14, **dadurch gekennzeichnet, dass** die Komponente C1 ein Phosphinsäuresalz der allgemeinen Formel (I) und/oder Formel (II) und/oder deren Polymere ist 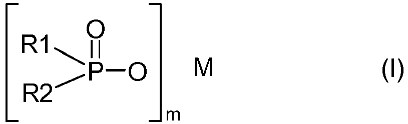 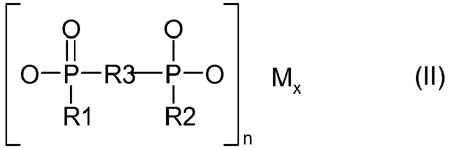 worin
R1, R2 gleich oder verschieden sind und C1-C8-Alkyl, linear oder verzweigt und/oder Aryl sein können;
R3 C1-C10-Alkylen, linear oder verzweigt, C6-C10-Arylen, Alkylarylen oder Arylalkylen sind;
M ein Metallion aus der 2. oder 3. Haupt- oder Nebengruppe des Periodensystems ist, wobei dieses ausgewählt sein kann als Aluminium, Barium, Calcium und/oder Zink; und
m = 2 oder 3;
n = 1 oder 3;
x = 1 oder 2.

16. Polyamidformmasse nach einem der vorhergehenden Ansprüche, **dadurch gekennzeichnet, dass** der Anteil an Komponente E im Bereich von 0-4 Gew.-%, oder im Bereich von 1-3 Gew.-% liegt, wobei es sich dabei um Additive und/oder weitere Polymere handeln kann, wobei diese ausgewählt sein können aus der folgenden Gruppe: Schlagzähmodifikatoren, Haftvermittler, Kristallisations-Beschleuniger oder -Verzögerer, Fliesshilfsmittel, Gleitmittel, Entformungsmittel, Weichmacher, Stabilisatoren, Verarbeitungshilfsmittel, flammhemmende Zusätze, Antistatika, Pigmente, Farb- und Markierungsstoffe, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie Monosäuren oder Monoamine, und/oder wobei es sich um sauerstoff-, stickstoff- oder schwefelhaltige Metallverbindungen als Stabilisatoren bzw. Synergisten zur Komponente C und/oder D handelt, wobei Metalle wie Aluminium, Calcium, Barium, Natrium, Kalium, Magnesium und/oder Zink möglich sind, wobei diese ausgewählt sein können als Verbindungen ausgewählt aus der Gruppe der Oxide, Hydroxide, Carbonate, Silikate, Borate, Phosphate, Stannate sowie Kombinationen oder Mischungen dieser Verbindungen, wie Oxid-Hydroxide oder Oxid-Hydroxid-Carbonate sind.

17. Verwendung von Bariumcarboxylat zur Verhinderung der korrosiven Wirkung einer Polyamidformmasse mit einem halogenfreien Flammschutzmittel auf Basis einer Phosphinsäure und/oder Diphosphinsäure wobei die Polyamidformmasse besteht aus
(A) wenigstens 30 Gew.-%, oder 40-80 Gew.-%, wenigstens eines aliphatischen teilkristallinen Polyamids mit einer Schmelztemperatur (Tₘ) im Bereich von 240°C - 340°C oder im Bereich von 270°C - 340°C und/oder eines teilaromatischen, teilkristallinen Polyamids mit einer Schmelztemperatur (Tₘ) im Bereich von 240°C - 340°C, wobei die Schmelztemperatur (Tₘ) jeweils nach ISO-_Norm 11357-11-2 am Granulat mit Differential Scanning Calorimetry (DSC) mit einer Aufheizrate von 20 °C/min bestimmt ist;
(B) 0 - 50 Gew.-%, oder 1-40 Gew.-%, wenigstens eines Füll- und Verstärkungsmittels;
(C) 8 - 16 Gew.-% wenigstens eines halogenfreien Flammschutzmittels wobei dieses auf Basis einer Phosphinsäure und/oder Diphosphinsäure ausgewählt sein kann;
(D) 0.1 - 2.0 Gew.-% wenigstens eines Bariumcarboxylats;
(E) 0 - 5 Gew.-% wenigstens eines Additives;
wobei die Gewichtsprozente der Komponenten (A) bis (E) zusammen 100% ergeben.

## Claims

1. A polyamide molding composition based on semicrystalline polyamides, consisting of
(A) at least 30% by weight of at least one aliphatic semicrystalline polyamide with melting point (Tₘ) in the range from 240°C to 340°C and/or a semiaromatic, semicrystalline polyamide with melting point (Tₘ) in the range from 240°C to 340°C, wherein the melting point (Tₘ) in each case is determined according to ISO Norm 11357-11-2 in a granulate with differential scanning calorimetry (DSC) with a heating rate of 20°C/min;
(B) from 0 to 50% by weight of at least one filler and reinforcing agent;
(C) from 8 to 16% by weight of at least one halogen-free flame retardant;
(D) from 0.1 to 2.0% by weight of at least one barium carboxylate;
(E) from 0 to 5% by weight of at least one additive;
wherein the percentages by weight of components (A) to (E) give a total of 100%.

2. The polyamide molding composition as claimed in claim 1, **characterized in that** component A is 40 to 80% by weight, of at least one semiaromatic, semicrystalline polyamide with melting point (Tₘ) in the range from 240°C to 340°C or in the range from 270°C to 340°C.

3. The polyamide molding composition as claimed in claim 1 or 2, **characterized in that** the proportion of component (D) is in the range from 0.2 to 1.5% by weight, or in the range from 0.3 to 1.0% by weight.

4. The polyamide molding composition as claimed in claim 3, **characterized in that** the barium carboxylate of component (D) has the general formula
Ba(CO₂-R₁)₂
wherein R₁ has been selected from the group of: H, alkyl, aryl, cycloalkyl, having from 1 to 36 carbon atoms, wherein R1 can be based on formic, acetic, propionic, butyric, valeric, caproic, enanthic, caprylic, pelargonic, capric, lauric, myristic, palmitic, margaric, stearic, 12-hydroxystearic, oleic, arachic, behenic, erucic, lignoceric, cerotinic, montanic, or melissic acid, or 2-ethylhexylcarboxylic acid, ricinoleic acid, or a mixture thereof,
or that the barium carboxylate of component (D) has the general formula
Ba((CO₂)₂-R),
wherein R₂ has been selected from the group of: alkyl, aryl, cycloalkyl, having from 1 to 36 carbon atoms, wherein R can be based on oxalic acid, malonic acid, maleic acid, succinic acid, malic acid, tartaric acid, glutaric acid, adipic acid, azelaic acid, sebacic acid, or undecane-, dodecane-, tridecane-, tetradecane-, pentadecane-, hexadecane-, heptadecane-, octadecane-, nonadecane-, or eicosanedioic acid, C36 dimer fatty acid, or a mixture thereof.

5. The polyamide molding composition as claimed in claim 2 or 3, **characterized in that** the barium carboxylate is based on a linear, saturated, substituted or unsubstituted, fatty acid having 12, 14, 16, 18 or 20 carbon atoms, or is based on a mixture of those fatty acids, wherein the barium carboxylate can be selected from the group of: barium laurate, barium palmitate, barium stearate and barium 12-hydroxystearate.

6. The polyamide molding composition as claimed in any of the preceding claims, **characterized in that** the melting point of the at least one semicrystalline polyamide of component A is in the range from 270°C to 340°C, or in the range from 280°C to 330°C.

7. The polyamide molding composition as claimed in any of the preceding claims, **characterized in that**, in a situation where component A is in a semiaromatic, semicrystalline polyamide, the semiaromatic, semicrystalline polyamide of component A is composed of:
(A1) from 25 to 100 mol% of terephthalic acid, based on total content of acids present,
from 0 to 75 mol%, based on total content of acids present, of at least one dicarboxylic acid selected from the group of: aromatic dicarboxylic acid having from 8 to 20 carbon atoms, other than terephthalic acid, aliphatic dicarboxylic acid having from 6 to 36 carbon atoms, cycloaliphatic dicarboxylic acid having from 8 to 20 carbon atoms, or a mixture thereof,
(A2) from 25 to 100 mol%, based on total content of diamines present, of at least one aliphatic diamine having from 4 to 36 carbon atoms,
from 0 to 75 mol%, based on total content of diamines present, of at least one diamine selected from the group of: cycloaliphatic diamine having from 6 to 20 carbon atoms, araliphatic diamine,
wherein the percentage molar content of dicarboxylic acids is 100% and the percentage molar content of diamines is 100%,
and also of:
(A3) from 0 to 100 mol% of aminocarboxylic acids and/or lactams having from 6 to 12 carbon atoms,
with the proviso that the concentration of (A3) is at most 40% by weight, or at most 30% by weight, or at most 20% by weight, based on the entirety of (A1) to (A3).

8. The polyamide molding composition as claimed in claim 7, **characterized in that** the dicarboxylic acid of component A1 other than terephthalic acid has been selected from the group of: naphthalenedicarboxylic acid, isophthalic acid, adipic acid, suberic acid, azelaic acid, sebacic acid, undecanedioic acid, dodecanedioic acid, brassylic acid, tetradecanedioic acid, pentadecanedioic acid, hexadecanedioic acid, octadecanedioic acid, dimer acid, cis- and/or trans-cyclohexane-1,4-dicarboxylic acid, cis- and/or trans-cyclohexane-1,3-dicarboxylic acid and, respectively, mixtures thereof,
and/or that the aliphatic diamine of component A2 has been selected from the group of: 1,4-butanediamine, 1,5-pentanediamine, 1,6-hexanediamine, 2-methyl-1,5-pentanediamine, 1,7-heptanediamine, 1,8-octanediamine, 1,9-nonanediamine, 2-methyl-1,8-octanediamine, 2,2,4-trimethylhexamethylenediamine, 2,4,4-trimethylhexamethylenediamine, 5-methyl-1,9-nonanediamine, 1,10-decanediamine, 1,11-undecanediamine, 2-butyl-2-ethyl-1,5-pentanediamine, 1,12-dodecanediamine, 1,13-tridecanediamine, 1,14-tetradecanediamine, 1,16-hexadecanediamine, 1,18-octadecanediamine, and mixtures thereof,
and/or that the cycloaliphatic and, respectively, araliphatic diamine of component A2 has been selected from the group of: cyclohexanediamine, 1,3-bis(aminomethyl)cyclohexane,
isophoronediamine, norbornanedimethylamine, 4,4'-diaminodicyclohexylmethane, 2,2-(4,4'-diaminodicyclohexyl)propane, and 3,3'-dimethyl-4,4'-diaminodicyclohexylmethane, m-xylylenediamine, and p-xylylenediamine, and, respectively, mixtures thereof,
and/or that component A3 has been selected from the group of: caprolactam, α,ω-aminocaproic acid, α,ω-aminononanoic acid, α,ω-aminoundecanoic acid, laurolactam, α,ω-aminododecanoic acid, α,ω-amino acids having 4, 6, 7, 8, 11, or 12 carbon atoms, and in particular pyrrolidin-2-one, ε-caprolactam, enantholactam, caprylolactam, laurolactam, 1,4-aminobutanoic acid, 1,6-aminohexanoic acid, 1,7-aminoheptanoic acid, 1,8-aminooctanoic acid, 1,11-aminoundecanoic acid, and 1,12-aminododecanoic acid and, respectively, mixtures thereof.

9. The polyamide molding composition as claimed in claim 7 or 8, **characterized in that** the proportion of terephthalic acid in component A1 is at least 50 mol%, or at least 52 mol%, or at least 54 mol%, and or at least 62 mol%, wherein component A2 can consist exclusively of hexamethylenediamine or exclusively of 2-methyl-1,5-pentanediamine, or exclusively of a mixture of hexamethylenediamine and 2-methyl-1,5-pentanediamine.

10. The polyamide molding composition as claimed in any of claims 7 to 9, **characterized in that** the proportion of terephthalic acid in component A1 is at least 50 mol%, and that within component A2 the aliphatic diamine encompasses a proportion of at least 10 mol% or at least 15 mol%, or at least 50 mol%, of hexamethylenediamine, and that the remaining diamine content has been selected from the group of: nonanediamine, methyloctanediamine, decanediamine, dodecanediamine, trimethylhexamethylenediamine, m-xylylenediamine, bis(4-aminocyclohexyl)methane, bis(4-amino-3-methylcyclohexyl)methane, or a mixture thereof, wherein only one system from this group is preferably used in a mixture with hexamethylenediamine,
that the proportion of terephthalic acid in component A1 is at least 50 mol%, and that component A2 is a mixture of hexamethylenediamine and decanediamine, wherein at least 10 mol%, or at least 15 mol%, or at least 50 mol%, of hexamethylenediamine is used, based on total diamine content;
that the proportion of terephthalic acid in component A1 is at least 80 mol%, or 100 mol%, and that component A2 consists of from 10 to 60 mol% of hexamethylenediamine and from 40 to 90 mol% of decanediamine.

11. The polyamide molding composition as claimed in any of preceding claims 7 to 10, **characterized in that** component A selected from the following group:
nylon-6,T/6,I having from 50 to 80 mol% of hexamethylene terephthalamide units and from 20 to 50 mol% of hexamethylene isophthalamide units, or having from 55 to 75 mol% of hexamethylene terephthalamide units and from 25 to 45 mol% of hexamethylene isophthalamide units, or having from 62 to 73 mol% of hexamethylene terephthalamide units and from 25 to 38 mol% of hexamethylene isophthalamide units,
nylon-6,T/6,6 having from 50 to 80 mol% of hexamethylene terephthalamide units and from 20 to 50 mol% of hexamethylene adipamide units, or having from 50 to 65 mol% of hexamethylene terephthalamide units and from 35 to 50 mol% of hexamethylene adipamide units, or having from 52 to 62 mol% of hexamethylene terephthalamide units and from 38 to 48 mol% of hexamethylene adipamide, ternary nylon, wherein this can be selected from 6,T/6,I/6,6, having from 50 to 70 mol% of hexamethylene terephthalamide units, from 5 to 45 mol% of hexamethylene isophthalamide units, and from 5 to 45 mol% of hexamethylene adipamide units;
or 6,T/6,I/X having at least 50 mol% of hexamethylene terephthalamide units, from 0 to 40 mol% of hexamethylene isophthalamide units, and from 10 to 50 mol% of aliphatic units of the formula NH-(CH₂)ₙ₋₁-CO-, wherein n = 6, 11, or 12;
or 6,T/6,I/X having at least 50 mol% of hexamethylene terephthalamide units, from 10 to 30 mol% of hexamethylene isophthalamide units, and from 10 to 40 mol% of aliphatic units of the formula -NH-(CH₂)ₙ₋₁-CO-, wherein n = 6, 11, or 12;
or 6,T/6,I/X having from 52 to 73 mol% of hexamethylene terephthalamide units, from 0 to 36 mol% of hexamethylene isophthalamide units, and from 12 to 48 mol% of aliphatic units of the formula -NH-(CH₂)ₙ₋₁-CO-, wherein n = 6, 11, or 12;
or 6,T/6,I/X having from 52 to 73 mol% of hexamethylene terephthalamide units, from 10 to 36 mol% of hexamethylene isophthalamide units, and from 12 to 38 mol% of aliphatic units of the formula -NH-(CH₂)ₙ₋₁-CO-, wherein n = 6, 11, or 12.

12. The polyamide molding composition as claimed in any one of the preceding claims, **characterized in that** the proportion of component B is in the range from 1 to 40% by weight, or in the range from 10 to 40% by weight, or in the range from 20 to 40% by weight, wherein this can be fibrous or particulate fillers, or a mixture of these, and wherein fibrous fillers have can be selected from the group of glass fibers, carbon fibers, aramid fibers, and potassium titanate whiskers, wherein these fillers can be present in the form of continuous-filament strands or in chopped form, in particular in the form of short glass fibers, and wherein they further preferably have been equipped with a size and/or with a coupling agent, wherein particular preference is given to use of glass fibers made of E glass and/or to those with circular cross section and/or with non-circular cross section,
and wherein particulate fillers selected can be those based on minerals, those based on talc, on mica, on silicate, on quartz, on titanium dioxide, on wollastonite, on kaolin, on amorphous silicas, on magnesium carbonate, on magnesium hydroxide, on chalk, on limestone, on feldspar, on barium sulfate, solid or hollow glass beads, or ground glass, or glass flakes, or on durably magnetic and, respectively, magnetizable metal compounds, and/or alloys or mixtures thereof.

13. The polyamide molding composition as claimed in any of the preceding claims, **characterized in that** the proportion of component C is in the range from 10 to 16% by weight, or in the range from 10 to 15% by weight, and wherein component C can be at least to some extent based on a phosphinic salt and/or diphosphinic salt.

14. The polyamide molding composition as claimed in any of the preceding claims, **characterized in that** component C encompasses:
C1 from 60 to 100% by weight, or from 70 to 98% by weight, or from 80 to 96% by weight, of a phosphinic salt and/or diphosphinic salt;
C2 from 0 to 40% by weight, or from 2 to 30% by weight, or from 4 to 20% by weight, of a nitrogen-containing synergist and/or of a nitrogen- and phosphorus-containing flame retardant, which can be melamine or condensates of melamine, including one selected from the group of: melem, melam, melon, reaction products of melamine with polyphosphoric acid, reaction products of condensates of melamine with polyphosphoric acid, or a mixture thereof.

15. The polyamide molding composition as claimed in claim 14, **characterized in that** component C1 is a phosphinic salt of the general formula (I) and/or formula (II), and/or polymers thereof 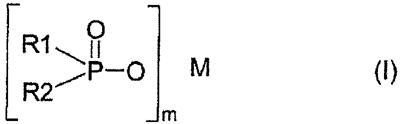 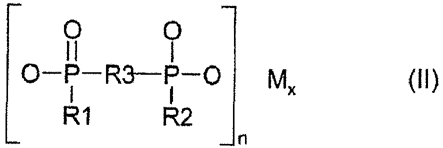 in which
R1 and R2 are identical or different and can be C1-C8-alkyl, linear or branched, and/or aryl;
R3 is C1-C10-alkylene, linear or branched, C6-C10-arylene, alkylarylene, or arylalkylene;
M is a metal ion from the 2nd or 3rd main or transition group of the Periodic Table of the Elements, which can be aluminum, barium, calcium, and/or zinc; and
m = 2 or 3;
n = 1 or 3;
x = 1 or 2.

16. The polyamide molding composition as claimed in any of the preceding claims, **characterized in that** the proportion of component E is in the range from 0 to 4% by weight, or in the range from 1 to 3% by weight, wherein this can be additives and/or further polymers, which can be selected from the following group: impact modifiers, coupling agents, crystallization accelerators or crystallization retarders, flow aids, lubricants, mold-release agents, plasticizers, stabilizers, processing aids, flame-retardant additions, antistatic agents, pigments, dyes and markers, lamellar nanoparticles, conductivity additives, e.g. carbon black, graphite powder, or carbon nanofibrils, residues from polymerization processes, such as catalysts, salts, and derivatives of these, and also regulators, such as monoacids or monoamines, and/or wherein these are oxygen-, nitrogen-, or sulfur-containing metal compounds as stabilizers and, respectively, synergists with respect to component C and component D, wherein preference is given to metals, e.g. aluminum, calcium, barium, sodium, potassium, magnesium, and/or zinc, wherein the compounds can be selected from the group of the oxides, hydroxides, carbonates, silicates, borates, phosphates, and stannates, and also to combinations and mixtures of these compounds, e.g. oxide hydroxides or oxide hydroxide carbonates.

17. The use of barium carboxylate for inhibiting the corrosive action of a polyamide molding composition using a halogen-free flame retardant based on a phosphinic acid and/or diphosphinic acid, wherein the polyamide molding composition consists of
(A) at least 30% by weight, or 40 to 80% by weight, of at least one aliphatic semicrystalline polyamide with melting point (Tₘ) in the range from 240°C to 340°C or in the range from 270°C to 340°C and/or semiaromatic, semicrystalline polyamide with melting point (Tₘ) in the range from 240°C to 340°C and or in the range from 270°C to 340°C, wherein the melting point (Tₘ) in each case is determined according to ISO Norm 11357-11-2 in a granulate with differential scanning calorimetry (DSC) with a heating rate of 20°C/min;
(B) from 0 to 50% by weight, or from 1 to 40% by weight, of at least one filler and reinforcing agent;
(C) from 8 to 16% by weight of at least one halogen-free flame retardant;
(D) from 0.1 to 2.0% by weight of at least one barium carboxylate;
(E) from 0 to 5% by weight of at least one additive;
wherein the percentages by weight of components (A) to (E) give a total of 100%.

## Revendications

1. Matière à mouler polyamide à base de polyamides partiellement cristallins, constituée de
(A) au moins 30 % en poids d'au moins un polyamide partiellement cristallin aliphatique ayant une température de fusion (Tₘ) dans la plage de 240 °C à 340 °C et/ou un polyamide partiellement cristallin, partiellement aromatique, ayant une température de fusion (Tₘ) dans la plage de 240 °C à 340 °C, la température de fusion (Tₘ) étant chaque fois déterminée selon la norme ISO 11357-11-2 sur le produit granulé, par Differential Scanning Calorimetry (DSC) à une vitesse de chauffage de 20 °C/min ;
(B) 0 - 50 % en poids d'au moins un agent de charge et de renforcement ;
(C) 8 - 16 % en poids d'au moins un agent ignifuge exempt d'halogène ;
(D) 0,1 - 2,0 % en poids d'au moins un carboxylate de baryum ;
(E) 0 - 5 % en poids d'au moins un additif ;
la somme des pour cent en poids des composants (A) à (E) étant égale à 100 %.

2. Matière à mouler polyamide selon la revendication 1, **caractérisée en ce que** le composant A est constitué de 40 - 80 % en poids d'au moins un polyamide partiellement cristallin, partiellement aromatique, ayant une température de fusion (Tₘ) dans la plage de 240 °C à 340 °C ou dans la plage de 270 °C à 340 °C.

3. Matière à mouler polyamide selon la revendication 1 ou 2, **caractérisée en ce que** la proportion du composant (D) se situe dans la plage de 0,2 à 1,5 % en poids, ou dans la plage de 0,3 à 1,0 % en poids.

4. Matière à mouler polyamide selon la revendication 3, **caractérisée en ce que** le carboxylate de baryum du composant (D) présente la formule générale
Ba(CO₂-R₁)₂
dans laquelle R₁ est choisi dans le groupe constitué par : H, un groupe alkyle, aryle, cycloalkyle, ayant de 1 à 36 atomes de carbone, R₁ pouvant être choisi à base d'acide formique, acétique, propionique, butyrique, valérique, caproïque, énanthique, caprylique, pélargonique, caprique, laurique, myristique, palmitique, margarique, stéarique, 12-hydroxystéarique, oléique, arachidique, béhénique, érucique, lignocérique, cérotique, montanique, mélissique, d'acide 2-éthylhexylcarboxylique, d'acide ricinoléique ou d'un mélange de tels acides,
ou **en ce que** le carboxylate de baryum du composant (D) présente la formule générale
Ba((CO₂)₂-R)
dans laquelle R est choisi dans le groupe constitué par : un groupe alkyle, aryle, cycloalkyle, ayant de 1 à 36 atomes de carbone, R pouvant être choisi à base d'acide oxalique, d'acide malonique, d'acide maléique, d'acide succinique, d'acide malique, d'acide d-tartrique, d'acide glutarique, d'acide adipique, d'acide azélaïque, d'acide sébacique, d'acide undécanoïque, dodécanoïque, tridécanoïque, tétra-décanoïque, pentadécanoïque, hexadécanoïque, hepta-décanoïque, octadécanoïque, nonadécanoïque ou eicosanedioïque, d'acide gras dimère en C₃₆, ou d'un mélange de tels acides.

5. Matière à mouler polyamide selon l'une quelconque des revendications 2 et 3, **caractérisée en ce que** le carboxylate de baryum est à base d'un acide gras linéaire, saturé, substitué ou non substitué, ayant 12, 14. 16, 18 ou 20 atomes de carbone ou à base d'un mélange de tels acides gras, le carboxylate de baryum pouvant être choisi dans le groupe constitué par : le laurate de baryum, le palmitate de baryum, le stéarate de baryum, le 12-hydroxystéarate de baryum.

6. Matière à mouler polyamide selon l'une quelconque des revendications précédentes, **caractérisée en ce que** ledit au moins un polyamide partiellement cristallin du composant A présente une température de fusion dans la plage de 270 °C à 340 °C, ou dans la plage de 280 °C à 330 °C.

7. Matière à mouler polyamide selon l'une quelconque des revendications précédentes, **caractérisée en ce que** le polyamide partiellement cristallin, partiellement aromatique, du composant A, lorsque le composant A consiste en un polyamide partiellement cristallin, partiellement aromatique, est constitué de :
(A1) 25 - 100 % en moles d'acide téréphtalique, par rapport à la teneur totale en acides présents,
0 - 75 % en moles, par rapport à la teneur totale en acides présents, d'au moins un acide dicarboxylique choisi dans le groupe constitué par : un acide dicarboxylique aromatique ayant de 8 à 20 atomes de carbone, différent de l'acide téréphtalique, un acide dicarboxylique aliphatique ayant de 6 à 36 atomes de carbone, un acide dicarboxylique cycloaliphatique ayant de 8 à 20 atomes de carbone ou un mélange de tels acides,
(A2) 25 - 100 % en moles, par rapport à la teneur totale en diamines présentes, d'au moins une diamine aliphatique ayant de 4 à 36 atomes de carbone,
0 - 75 % en moles, par rapport à la teneur totale en diamines présentes, d'au moins une diamine choisie dans le groupe constitué par : une diamine cycloaliphatique ayant de 6 à 20 atomes de carbone, une diamine araliphatique,
la teneur molaire en acides dicarboxyliques en pour cent représentant 100 % et la teneur molaire en diamines en pour cent représentant 100 %,
ainsi que de :
(A3) 0 - 100 % en moles d'acides aminocarboxyliques et/ou de lactames ayant de 6 à 12 atomes de carbone,
étant entendu que la concentration de (A3) représente au maximum 40 % en poids, ou au maximum 30 % en poids, ou au maximum 20 % en poids, par rapport à la somme de (A1) à (A3).

8. Matière à mouler polyamide selon la revendication 7, **caractérisée en ce que** l'acide dicarboxylique du composant A1, différent de l'acide téréphtalique, est choisi dans le groupe constitué par : l'acide naphtalènedicarboxylique, l'acide isophtalique, l'acide adipique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque, un acide dimère, l'acide cis- et/ou l'acide trans-cyclohexane-1,4-dicarboxylique, l'acide cis- et/ou l'acide trans-cyclohexane-1,3-dicarboxylique ou des mélanges de tels acides,
et/ou **en ce que** la diamine aliphatique du composant A2 est choisie dans le groupe constitué par : la 1,4-butanediamine, la 1,5-pentanediamine, la 1,6-hexanediamine, la 2-méthyl-1,5-pentanediamine, la 1,7-heptanediamine, la 1,8-octanediamine, la 1,9-nonanediamine, la 2-méthyl-1,8-octanediamine, la 2,2,4-triméthylhexaméthylènediamine, la 2,4,4-triméthylhexaméthylènediamine, la 5-méthyl-1,9-nonanediamine, la 1,10-décanediamine, la 1,11-undécanediamine, la 2-butyl-2-éthyl-1,5-pentanediamine, la 1,12-dodécanediamine, la 1,13-tridécanediamine, la 1,14-tétradécanediamine, la 1,16-hexadécanediamine, la 1,18-octadécanediamine ou un mélange de telles amines,
et/ou **en ce que** la diamine araliphatique ou cycloaliphatique du composant A2 est choisie dans le groupe constitué par : la cyclohexanediamine, le 1,3-bis-(aminométhyl)-cyclohexane, l'isophoronediamine, la norbornanediméthylamine, le 4,4'-diaminodicyclohexylméthane, le 2,2-(4,4'-diaminodicyclohexyl)propane et le 3,3'-diméthyl-4,4'-diaminodicyclohexylméthane, la m-xylylènediamine et la p-xylylènediamine, ou des mélanges de telles amines,
et/ou **en ce que** le composant A3 est choisi dans le groupe constitué par : le caprolactame, l'acide α,ω-aminocaproïque, l'acide α,ω-aminononanoïque, l'acide α,ω-amino-undécanoïque, le lauryllactame, l'acide α,ω-aminododécanoïque, les acides α,ω-aminés ayant 4, 6, 7, 8, 11 ou 12 atomes de carbone, en particulier la pyrrolidin-2-one, l'ε-caprolactame, l'énantholactame, le capryllactame, le lauryllactame, l'acide 1,4-aminobutanoïque, l'acide 1,6-aminohexanoïque, l'acide 1,7-aminoheptanoïque, l'acide 1,8-amino-octanoïque, l'acide 1,11-amino-undécanoïque et l'acide 1,12-amino-dodécanoïque ou des mélanges de ceux-ci.

9. Matière à mouler polyamide selon l'une quelconque des revendications 7 et 8, **caractérisée en ce que** la teneur en acide téréphtalique du composant A1 représente au moins 50 % en moles, ou au moins 52 % en moles, ou au moins 54 % en moles, ou au moins 62 % en moles, le composant A2 pouvant consister exclusivement en hexaméthylènediamine ou exclusivement en 2-méthyl-1,5-pentanediamine ou exclusivement en un mélange d'hexaméthylènediamine et de 2-méthyl-1,5-pentanediamine.

10. Matière à mouler polyamide selon l'une quelconque des revendications 7 à 9, **caractérisée en ce que** la proportion d'acide téréphtalique dans le composant A1 représente au moins 50 % en moles, et **en ce que** dans le composant A2 la diamine aliphatique hexaméthylènediamine est comprise en une proportion d'au moins 10 % en moles, ou d'au moins 50 % en moles, et **en ce que** la proportion restante de diamine est choisie dans le groupe constitué par : la nonanediamine, la méthyloctanediamine, le décanediamine, la dodécanediamine, la triméthylhexaméthylènediamine, la m-xylylènediamine, le bis-(4-aminocyclohexyl)-méthane, le bis-(4-amino-3-méthylcyclohexyl)-méthane, ou un mélange de telles amines, de ce groupe de préférence seulement un système en un mélange avec l'hexaméthylènediamine étant utilisé,
**en ce que** la proportion d'acide téréphtalique dans le composant A1 représente au moins 50 % en moles, et **en ce que** le composant A2 est un mélange d'hexaméthylènediamine et de décanediamine, au moins 10 % en moles, ou au moins 15 % en moles, ou au moins 50 % en moles, d'hexaméthylènediamine, par rapport à la teneur totale en diamines, étant utilisés :
**en ce que** la proportion d'acide téréphtalique dans le composant A1 représente au moins 80 % en moles, ou 100 % en moles, et **en ce que** le composant A2 est constitué de 10 - 60 % en moles d'hexaméthylènediamine et 40 - 90 % en moles de décanediamine.

11. Matière à mouler polyamide selon l'une quelconque des revendications 7 à 10 précédentes, **caractérisée en ce que** le composant A est choisi dans le groupe suivant :
un polyamide 6T/6I comportant 50 à 80 % en moles d'unités hexaméthylènetéréphtalamide et 20 à 50 % en moles d'unités hexaméthylène-isophtalamide, ou comportant 55 à 75 % en moles d'unités hexaméthylènetéréphtalamide et 25 à 45 % en moles d'unités hexaméthylène-isophtalamide, ou comportant 62 à 73 % en moles d'unités hexaméthylènetéréphtalamide et 25 à 38 % en moles d'unités hexaméthylène-isophtalamide ;
un polyamide 6T/66 comportant 50 à 80 % en moles d'unités hexaméthylènetéréphtalamide et 20 à 50 % en moles d'unités hexaméthylène-adipamide, ou comportant 50 à 65 % en moles d'unités hexaméthylènetéréphtalamide et 35 à 50 % en moles d'unités hexaméthylène-adipamide, ou comportant 52 à 62 % en moles d'unités hexaméthylènetéréphtalamide et 38 à 48 % en moles d'hexaméthylène-adipamide ;
un polyamide ternaire, le polyamide ternaire pouvant être choisi dans le groupe suivant : 6T/6I/66 comportant 50 à 70 % en moles d'unités hexaméthylènetéréphtalamide, 5 à 45 % en moles d'hexaméthylène-isophtalamide et 5 à 45 % en moles d'unités hexaméthylène-adipamide ;
un polyamide 6T/6I/X comportant au moins 50 % en moles d'unités hexaméthylènetéréphtalamide, 0 à 40 % en moles d'unités hexaméthylène-isophtalamide et 10 à 50 % en moles d'unités aliphatiques de formule NH-(CH₂)ₙ₋₁-CO-, où n = 6, 11 ou 12 ;
un polyamide 6T/6I/X comportant au moins 50 % en moles d'unités hexaméthylènetéréphtalamide, 10 à 30 % en moles d'unités hexaméthylène-isophtalamide et 10 à 40 % en moles d'unités aliphatiques de formule NH-(CH₂)ₙ₋₁-CO-, où n = 6, 11 ou 12 ;
un polyamide 6T/6I/X comportant 52 à 73 % en moles d'unités hexaméthylènetéréphtalamide, 0 à 36 % en moles d'unités hexaméthylène-isophtalamide et 12 à 48 % en moles d'unités aliphatiques de formule NH-(CH₂)ₙ₋₁-CO-, où n = 6, 11 ou 12 ;
un polyamide 6T/6I/X comportant 52 à 73 % en moles d'unités hexaméthylènetéréphtalamide et 10 à 36 % en moles d'unités hexaméthylène-isophtalamide, 12 à 38 % en moles d'unités aliphatiques de formule NH-(CH₂)ₙ₋₁-CO-, où n = 6, 11 ou 12.

12. Matière à mouler polyamide selon l'une quelconque des revendications précédentes, **caractérisée en ce que** la proportion du composant B se situe dans la plage de 1 à 40 % en poids, ou dans la plage de 10 à 40 % en poids, ou dans la plage de 20 à 40 % en poids, où il peut s'agir de charges fibreuses ou particulaires ou de mélanges de celles-ci, et les charges fibreuses pouvant être choisies dans le groupe constitué par des fibres de verre, des fibres de carbone, des fibres d'aramide, des trichites de titanate de potassium, ces charges se trouvant sous forme de brins continus ou sous forme coupée en fibres de verre courtes, et pouvant être munies d'un ensimage et/ou d'un agent d'adhérence, des fibres de verre à base de verre E et/ou celles à section transversale circulaire et/ou à section transversale non circulaire pouvant être utilisées,
et les charges particulaires pouvant être choisies à base minérale de talc, mica, silicate, quartz, dioxyde de titane, wollastonite, kaolin, silices amorphes, carbonate de magnésium, hydroxyde de magnésium, craie, chaux, feldspath, sulfate de baryum, billes de verre pleines ou creuses ou verre pilé, écailles de verre, composés métalliques et/ou alliages, magnétisables ou à aimantation permanente, ou des mélanges de ceux-ci.

13. Matière à mouler polyamide selon l'une quelconque des revendications précédentes, **caractérisée en ce que** la proportion du composant C se situe dans la plage de 10 à 16 % en poids, ou dans la plage de 10 à 15 % en poids, et le composant C pouvant être constitué au moins en partie à base d'un sel d'acide phosphinique et/ou d'un sel d'acide diphosphinique.

14. Matière à mouler polyamide selon l'une quelconque des revendications précédentes, **caractérisée en ce que** le composant C comprend :
C1 60 - 100 % en poids, ou 70 - 98 % en poids, ou 80 - 96 % en poids d'un sel d'acide phosphinique et/ou d'un sel d'acide diphosphinique ;
C2 0 - 40 % en poids, ou 2 - 30 % en poids, ou 4 - 20 % en poids d'un agent synergique azoté et/ou d'un agent ignifuge contenant de l'azote et du phosphore, choisi en tant que mélanine ou produits de condensation de la mélamine, ces agents ignifuges pouvant être choisis dans le groupe constitué par : le mélem, le mélam, le mélon, des produits de réaction de mélamine avec l'acide polyphosphorique, des produits de réaction de produits de condensation de la mélamine avec l'acide polyphosphorique, ou des mélanges de ceux-ci.

15. Matière à mouler polyamide selon la revendication 14, **caractérisée en ce que** le composant C1 est un sel d'acide phosphinique de formule générale (I) et/ou de formule générale (II) et/ou de leurs polymères 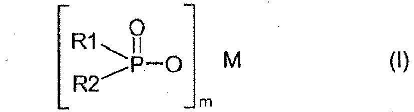 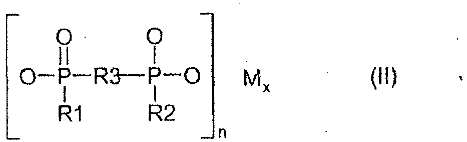 formules dans lesquelles
R1, R2 sont identiques ou différents et peuvent être un groupe alkyle en C₁-C₈, linéaire ou ramifié, et/ou un groupe aryle ;
R3 sont des groupes alkylène en C₁-C₁₀, linéaires ou ramifiés, arylène en C₆-C₁₀, alkylarylène ou arylalkylène ;
M est un ion métallique choisi dans l'ensemble constitué par le 2^{e} ou 3^{e} groupe principal ou secondaire du système périodique, cet ion pouvant être choisi parmi l'aluminium, le baryum, le calcium et/ou le zinc ; et
m = 2 ou 3 ;
n = 1 ou 3 ;
x = 1 ou 2.

16. Matière à mouler polyamide selon l'une quelconque des revendications précédentes, **caractérisée en ce que** la proportion du composant E se situe dans la plage de 0 à 4 % en poids, ou dans la plage de 1 à 3 % en poids, où il peut en ce cas s'agir d'additifs et/ou d'autres polymères, ceux-ci pouvant être choisis dans le groupe suivant : modificateurs antichoc, agents d'adhérence, accélérateurs ou ralentisseur de cristallisation, adjuvants d'écoulement, lubrifiants, agents de démoulage, plastifiants, stabilisants, adjuvants de mise en oeuvre, additifs ignifuges, agents antistatiques, pigments, colorants et agents de marquage, nanoparticules sous forme de plaquettes, additifs de conductivité, tels que le noir de carbone, la poudre de graphite ou les nanofibrilles de carbone, résidus de processus de polymérisation tels que des catalyseurs, des sels et leurs dérivés, ainsi que des régulateurs tels que monoacides ou des monoamines, et/ou il s'agit de composés métalliques contenant de l'oxygène, de l'azote ou du soufre, en tant que stabilisants ou agent synergiques pour le composant C et/ou le composant D, des métaux tels que l'aluminium, le calcium, le baryum, le sodium, le potassium, le magnésium et/ou le zinc étant possibles, ceux-ci pouvant être choisis sous forme de composés choisis dans le groupe des oxydes, hydroxydes, carbonates, silicates, borates, phosphates, stannates ainsi que des associations ou mélanges de ces composés, tels que des oxyde-hydroxydes ou oxyde-hydroxyde-carbonates.

17. Utilisation de carboxylate de baryum pour empêcher l'action corrosive d'une matière à mouler polyamide comportant un agent ignifuge exempt d'halogène, à base d'un acide phosphinique et/ou d'un acide diphosphinique, la matière à mouler polyamide étant constituée de
(A) au moins 30 % en poids, ou 40 - 80 % en poids, d'au moins un polyamide partiellement cristallin aliphatique ayant une température de fusion (Tₘ) dans la plage de 240 °C à 340 °C ou dans la plage de 270 °C à 340 °C et/ou un polyamide partiellement cristallin, partiellement aromatique, ayant une température de fusion (Tₘ) dans la plage de 240 °C à 340 °C, la température de fusion (Tₘ) étant chaque fois déterminée selon la norme ISO 11357-11-2 sur le produit granulé, par Differential Scanning Calorimetry (DSC) à une vitesse de chauffage de 20 °C/min ;
(B) 0 - 50 % en poids, ou 1 - 40 % en poids, d'au moins un agent de charge et de renforcement ;
(C) 8 - 16 % en poids d'au moins un agent ignifuge exempt d'halogène, ce dernier pouvant être choisi à base d'un acide phosphinique et/ou d'un acide diphosphinique ;
(D) 0,1 - 2,0 % en poids d'au moins un carboxylate de baryum ;
(E) 0 - 5 % en poids d'au moins un additif ;
la somme des pour cent en poids des composants (A) à (E) étant égale à 100 %.
